# EUROPÄISCHE PATENTSCHRIFT

(11) **EP 4 603 738 B1**
(45) Veröffentlichungstag und Bekanntmachung des Hinweises auf die Patenterteilung: **09.09.2026**
(21) Anmeldenummer: 25157970.2
(22) Anmeldetag: 14.02.2025
(51) Int. Cl.: F16L 37/44, F16L 37/36, B60H 1/00, F25B 9/00, F25B 45/00, F16L 37/23

(54) **ANSCHLUSSADAPTER**
CONNECTION ADAPTER
ADAPTATEUR DE RACCORDEMENT

(30) Priorität: 14.02.2024 DE 102024104162
(43) Veröffentlichungstag der Anmeldung: 20.08.2025
(73) Patentinhaber: Cold Solutions VBB Kältetechnik GmbH, 99974 Mühlhausen (DE)
(72) Erfinder: Behrends, Peter, 99974 Mühlhausen (DE)
(74) Vertreter: Misselhorn, Hein-Martin

(56) Entgegenhaltungen:
- WO-A2-2004/005787
- US-B2- 11 067 209

## Beschreibung

### BEREICH DER ERFINDUNG

Die Erfindung betrifft einen Anschlussadapter zum An- und Abdocken einer Wartungsstation an ein Serviceventil

### TECHNISCHER HINTERGRUND

Sogenannte Anschlussadapter werden oftmals zur sicheren Herstellung eines lösbaren Strömungsweges zwischen zwei Fluidsystemen verwendet, wobei meist jeweils ein System mit diesen Anschlussadaptern ausgestattet ist.

Beispielsweise werden Evakuier-, Befüll- und Service- und Wartungsstationen für Kfz-Klimaanlagen (Kfz = Kraftfahrzeug) mit derartigen Anschlussadaptern ausgestattet, um die Befüllung mit Kältemittel, das Ablassen des Kältemittels, das Evakuieren oder auch Servicetätigkeiten an Kfz-Klimaanlagen sicher durchführen zu können.

In modernen Kfz-Klimaanlagen wird derzeit oftmals umweltverträglicheres CO₂ als Kältemittel verwendet. Das CO₂ als Kältemittel für Kfz-Klimaanlagen ist eine umweltfreundliche Alternative zum bisher oft verwendeten Kältemittel Tetrafluorethan (auch: R134a). CO₂ ist hierbei deutlich umweltverträglicher, hat eine hohe Kälteleistung, ist nicht brennbar, bildet keine Zerfallsprodukte und ist weltweit kostengünstig verfügbar. In der Kältetechnik wird das natürliche Kältemittel Kohlendioxid (CO₂) mit der Abkürzung R744 bezeichnet. Um das CO₂ im erforderlichen flüssigen Zustand zur Verfügung zu haben, muss dieses jedoch - im Vergleich zu Tetrafluorethan - einem deutlich höheren Druck ausgesetzt sein, was zu gefährlichen Bedingungen für Bedienpersonal beim Befüllen oder Ablassen des CO₂ als Kältemittel führen kann.

Allgemein werden aufgrund der Umweltschädlichkeit beim Freisetzen von Kältemitteln und/oder der Gefährdung des Bedienpersonals durch die Automobilbranche und das Kfz-Handwerk hohe Anforderungen an die Eigenschaften von Anschlussarmaturen wie den angesprochenen Anschlussadaptern gestellt. Die Verwendung des umweltverträglichen CO₂ als Kältemittel hat diese Forderungen aufgrund der angesprochenen sehr hohen Drucklage noch einmal verschärft. Demnach sollen/müssen derartige Anschlussarmaturen beispielsweise:
- über eine Druckentlastungsfunktion verfügen;
- eine Selbstausrichtungsfunktion des Ventildrückers haben;
- eine separate und eindeutige Funktion zum Öffnen und Schließen eines Serviceventils besitzen;
- sich bei geöffnetem Strömungsweg nicht vom Serviceventil lösen lassen;
- einen Verriegelungsmechanismus zum sicheren Anschluss an einem Serviceventil haben;
- eindeutig für die Zuordnung zum Hochdruck bzw. Niederdruck eines anzuschließenden Fluidsystems gekennzeichnet sein;
- das sichere Einrasten auf einem Ventilkörper vor dem hydraulischen Öffnen gewährleisten;
- eine Abziehkraft im verriegelten Zustand von mehr als 5.000 N haben;
- nach dem hydraulischen Schließen eine maximale Kraft zum Abziehen von kleiner 50 N benötigen;
- bei nicht angeschlossenem Serviceventil zuverlässig sicherstellen, dass kein Fluid (Kältemittel) austreten kann;
- verhindern, dass ein mechanisches Abkuppeln vom Serviceventil bei geöffnetem Strömungsweg möglich ist;
- mindestens für 5.000 Steckzyklen ausgelegt sein;
- über eine Entlüftung des Totraumes zwischen Anschlussadapter und Serviceventil verfügen, um nach dem Unterbrechen des Strömungsweges und vor dem Abkuppeln den Druck abzubauen sowie einen nicht richtig schließenden Ventileinsatz im Serviceventil erkennen zu können;
- den Druckabbau über die Anschlussarmaturen oder aber über das Servicegerät sicherstellen und
- über eine definierte Stiftniederdruckposition verfügen;
- einen genau definierten Platz und Weg bis zum "Siegelbruch" und bis zum vollständigen Öffnen des Serviceventiles einhalten. Diese Forderungen verlangen teilweise sehr gegensätzliche Funktionen, so dass diese von keiner bisherigen, bekannten Lösung in ihrer Gesamtheit umgesetzt werden.

Die Mehrheit der bisherigen Lösungen weist zudem keine Dauerhaltbarkeit der Dichtsysteme und gleichzeitig hohe Dichtheit im Betrieb auf. Dies trifft insbesondere auch bei hohen Systemdrücken zu, mit welchen bei CO₂ umgegangen werden muss. Insbesondere die diametrale Forderung des Öffnens und Schließens eines Strömungsweges und der Entlüftung des Totraumes sowie der Forderung, dass bei entkoppeltem Serviceventil kein Kältemittel austreten darf, führen dazu, dass die meisten Lösungen über keine Druckentlastungsfunktion und Entlüftung des Totraumes verfügen.

Allenfalls können derartige Anschlussarmaturen nur an Servicestationen verwendet werden, welche über eine eigene Druckentlastungsfunktion verfügen. Lösungen, welche beide Funktionen abbilden, zwingen aufgrund des zur Verfügung stehenden Weges zum Öffnen/Schließen des Strömungsweges bzw. der Entlüftung zu Kompromissen bei der Dimensionierung der notwendigen Dichtelemente, wodurch die Dauerhaltbarkeit eingeschränkt ist. Weitere Lösungen, welche beide der oben genannten Forderungen erfüllen, benötigen eine zweite Energiequelle.

Die US 11 067 209 B2 beschreibt einen Anschlussadapter zur Herstellung einer lösbaren Verbindung zwischen einem ersten Fluidsystem und einem zweiten Fluidsystem.

### AUFGABE DER ERFINDUNG

Vor diesem Hintergrund ist die Aufgabe der Erfindung, dahingehend zu konkretisieren, dass eine Anschlussarmatur angegeben werden soll, mit der sicher und bevorzugt werkzeuglos ein temporärer, hohen Druck führender Strömungsweg zwischen zwei Fluidsystemen hergestellt werden kann.

### ERFINDUNGSGEMÄSSE LÖSUNG

Eine Lösung dieser Aufgabe wird durch den Hauptanspruch bereitgestellt.

Erfindungsgemäß wird hierzu ein Anschlussadapter zum An- und Abdocken einer Wartungsstation an ein Serviceventil einer Fremdanlage, in der ein Arbeitsfluid in einem - zumindest im Wesentlichen - geschlossenen Kreislauf zirkuliert, insbesondere einer Klimaanlage - idealerweise in Gestalt einer Fahrzeugklimaanlage - vorgeschlagen. Die angesprochene Wartungsstation kann hierbei beispielsweise auch eine Evakuierstation, Befüllstation, Messstation und/oder Servicestation sein. Der Einfachheit halber wird eine derartige Station im Folgenden nur "Wartungsstation" genannt. In der angesprochenen Fremdanlage - besonders bevorzugt in Gestalt einer Fahrzeugklimaanlage - zirkuliert ein Arbeitsfluid in einem zumindest im Wesentlichen geschlossenen Kreislauf, wobei hierbei auch immer eine zeitabhängige Leckage miteingeschlossen ist, die in realen Anlagen existiert. Darüber hinaus umfasst eine derartige Fremdanlage auch eine Anlage, bei welcher das Arbeitsfluid noch nicht in einem geschlossenen Kreislauf zirkuliert, aber sogleich zirkulieren soll, was beispielsweise bei einer Erstbefüllung der Fremdanlage mit Arbeitsfluid der Fall ist.

Der erfindungsgemäße Anschlussadapter umfasst hierbei einen Anschluss, über den - beim Befüllvorgang - unter Druck stehendes Arbeitsfluid aus der Wartungsstation in den Anschlussadapter eingespeist werden kann, unter Druck stehendes Fluid in die Wartungsstation ausgeschleust oder beim Evakuiervorgang ein Unterdruck erzeugt werden kann.

Darüber hinaus umfasst der erfindungsgemäße Anschlussadapter einen Totraum - bevorzugt zwischen Anschlussadapter und Serviceventil -, welcher auch bei an den Anschlussadapter angekoppeltem Serviceventil über einen Entlüftungspfad belüftet wird; zumindest solange das ihm eigene Rückschlagventil noch geschlossen ist. Eine rechtzeitige Totraumentlüftung erhöht die Sicherheit beim Abkuppeln. Zudem merkt man dann frühzeitig und noch bevor etwas passieren kann, wenn der Federventileinsatz wider Erwarten nicht geschlossen haben sollte.

Der erfindungsgemäße Anschlussadapter umfasst zudem einen fluidisch mit dem Anschluss verbindbaren - und auch wieder von diesem trennbaren - Servoraum. In diesem Servoraum ist ein Servokolben zum Öffnen und Schließen des Entlüftungspfades aufgenommen. Dieser Servokolben wird bei einem im Servoraum anstehenden Überdruck in Richtung seiner den Entlüftungspfad schließenden Position gedrängt.

Der erfindungsgemäße Anschlussadapter umfasst zudem eine Ventilspindel, die ein erstes Ventilelement und ein zweites Ventilelement betätigt. Hierbei bildet die Ventilspindel vorzugsweise selbst die Ventilelemente aus; idealerweise sogar integral einstückig.

Hierbei ist das erste Ventilelement so gestaltet und positioniert, dass es bei Bewegung der Ventilspindel zum Initiieren des Aufstoßens des Serviceventils oder durch ein weiteres Bauteil zum Aufstoßen des Serviceventils den Servoraum fluidisch mit dem Anschluss verbindet. Das "Aufstoßen" des Serviceventils ist hierbei bevorzugt synonym mit dem Aufstoßen des Federventileinsatzes des Serviceventils.

Das zweite Ventilelement ist hierbei so gestaltet und positioniert, dass es erst öffnet und den Totraum fluidisch mit dem Servoraum - und damit auch mit dem Anschluss - verbindet, nachdem der Servokolben eine den Entlüftungspfad schließende Position erreicht hat.

Darüber hinaus umfasst der erfindungsgemäße Anschlussadapter einen Niederhalter zum Öffnen des Federventileinsatzes, welcher einen Bestandteil des Serviceventils bildet. Dieser Niederhalter ist so gestaltet und angeordnet, dass er den Federventileinsatz erst öffnet, nachdem der Servokolben eine den Entlüftungspfad schließende Position erreicht hat.

Die spezielle Anordnung der Bauteile des Anschlussadapters zueinander ermöglicht ein sicheres Befüllen, aber auch Evakuieren der Fremdanlage bei der Verwendung nur eines Anschlussadapters. So kann die Wartungsstation einfach mit der Fremdanlage verbunden werden. Über den Entlüftungspfad kann hierbei auf sichere Art und Weise Druck entweichen, falls nötig. Der Servokolben fungiert hierbei als Verschluss des Entlüftungspfades und schließt ebenjenen selbstständig, wenn etwa ein entsprechender Druck im Servoraum anliegt. Mit dem ersten Ventilelement kann dann ein erster Schritt unternommen werden, um den Servoraum mit dem Totraum zu verbinden, um den Strömungsweg herzustellen.

Das zweite Ventilelement kann erst öffnen und den Totraum endgültig fluidisch mit dem Servoraum verbinden, nachdem der Servokolben eine den Entlüftungspfad schließende Position erreicht hat.

So kann mit diesem einen Anschlussadapter eine sichere Möglichkeit geschaffen werden, eine Fremdanlage mit den verschiedensten Evakuier-, Befüll-, Wartungs- und Servicestationen zu verbinden, wobei dies unabhängig von der Art des Druckabbaus geschehen kann. Zudem können hiermit auch die Forderungen der Automobilbranche und des Kfz-Handwerks erfüllt werden.

### BEVORZUGTE WEITERBILDUNGSMÖGLICHKEITEN DER ERFINDUNG

Eine bevorzugte Ausführungsform des Anschlussadapters ist, wenn der Servokolben mindestens eine obere druckbeaufschlagte Stirnfläche und mindestens eine untere druckbeaufschlagte Stirnfläche aufweist, deren Verhältnis so gewählt ist, dass der Servokolben immer dann, wenn im Servoraum ein Druck, welcher größer ist als ein Grenzdruck, ansteht, gegen die Kraft einer Servokolbenfeder dichtend gegen das zweite Ventilelement gedrückt wird und/oder - bevorzugt: und - an den Anschlag einer Schiebehülse. Zudem ist es bevorzugt, dass - wenn im Servoraum ein Druck ansteht, der kleiner ist als der Grenzdruck, der Servokolben von der Kraft einer Servokolbenfeder an den oberen Anschlag am Ventilgehäuse gedrückt wird.

Der angesprochene Grenzdruck kann bevorzugt variabel gewählt werden und liegt bevorzugt in einem Bereich von 0,5 MPa bis 10 MPa, besonders bevorzugt in einem Bereich von 0,5 MPa bis 5 MPa hier bevorzugt bei 1 MPa.

Hierdurch wird sichergestellt, dass der Anschlussadapter einerseits bei einem Systeminnendruck, der größer als der Grenzdruck ist, sicher an einem gekoppelten Serviceventil fixiert ist. Andererseits, bei einem Systemdruck, der niedriger ist als der Grenzdruck, wird sichergestellt, dass der Servokolben den Entlüftungspfad sicher freigibt.

Darüber hinaus ist es besonders bevorzugt, wenn die zur Ventilsteuerung der Ventile, die den Anschluss mit dem Totraum verbinden, eingesetzte Ventilspindel ein erstes - bevorzugt als zylinderringförmiger Ventilteller ausgebildetes - Ventilelement aufweist und ein zweites - bevorzugt als kegelabschnittförmiger - bevorzugt als vollkegelabschnittförmiger - Ventilteller ausgebildetes - Ventilelement aufweist, das mit einem Ventilsitz am Servokolben derart kooperiert, dass der Servokolben von dem zweiten Ventilelement beim fluidischen Ankuppeln des Anschlussadapters gegen einen Druck im Servoraum in einer den Entlüftungspfad nicht verschließenden Position gehalten werden kann und beim fluidischen Abkuppeln des Anschlussadapters aus seiner den Entlüftungspfad verschließenden Position in eine den Entlüftungspfad nicht verschließende Position gezogen werden kann. So kann gewährleistet werden, dass der Entlüftungspfad - egal ob beim Ankuppeln oder beim Entkuppeln - immer freigegeben werden kann, damit ein Entlüften ermöglicht wird. Dies trägt weiterhin zur Arbeitssicherheit bei.

Zudem ist es besonders bevorzugt, wenn die Ventilspindel an ihrem einen Ende den Niederhalter zum Öffnen des einen Bestandteil des Serviceventils bildenden Federventileinsatzes ausbildet, der bevorzugt über einen Bund zur Selbstausrichtung des Niederhalters in den Rest der Ventilspindel übergeht. Hierbei weist der Niederhalter bevorzugt eine erste Radialbohrung auf, die über eine mit ihr verschnittene Axialbohrung in eine damit verschnittene zweite Radialbohrung in der Ventilspindel übergeht und so bei angekoppeltem Serviceventil eine fluidische Verbindung zwischen dem Raum unterhalb eines Bundes der Ventilspindel und dem Raum innerhalb des Servokolbens und innerhalb der Schiebehülse schafft.

Alternativ zur Anordnung dieser Bohrungen kann der erwähnte Bund auch mit parallel zur Ventilachse verlaufenden Strömungskanälen auf der Zylinderoberfläche ausgebildet werden. Beide Ausführungen stellen eine einfache und sichere fluidische Verbindung der beiden Räume dar.

Außerdem ist es besonders bevorzugt, wenn das erste Ventilelement so gestaltet und positioniert ist, dass es bei fehlendem Überdruck im Servoraum - wie er beim An- und Abdocken zum Zwecke des Entleerens vorkommen kann, wenn der Anschluss keinen Überdruck führt - den Servokolben durch Formschluss in eine den Entlüftungspfad verschließende Position drücken kann. So kann auch beim Evakuierungsvorgang, in welchem der Servokolben nicht durch den anstehenden Überdruck in eine den Entlüftungspfad verschließende Position gedrückt wird, anderweitig in die entsprechende Position gebracht werden. Hierzu wird bevorzugt ein Formschluss zwischen dem ersten Ventilelement und dem Servokolben hergestellt. Dies stellt eine einfache und sichere mechanische Möglichkeit zur Schließung des Entlüftungspfades im entsprechend vorliegendem Fall dar.

Eine besonders bevorzugte Ausführungsform besteht darin, dass die Ventilspindel in einem bevorzugt mehrteiligen Ventilgehäuse, das im Regelfall auch den Servoraum und den Totraum abgrenzt - und hierzu bevorzugt zumindest teilweise nach außen begrenzt - und im Idealfall auch den Anschluss trägt oder aufnehmen kann, axialverschiebbar geführt ist. Hierbei trägt das Ventilgehäuse einen über ein Gewinde mit ihm verbundenen Ventilbetätiger, mit dessen Hilfe die Ventilspindel - die bevorzugt über Wälzlager mit dem Ventilbetätiger verbunden ist - in axialer Richtung relativ zum Ventilgehäuse hin und her bewegt werden kann. Bei dem Gewinde handelt es sich vorzugsweise um ein Stellgewinde mit gegenüber dem metrischen Standardgewinde reduzierter Steigung oder ein Feingewinde. So wird eine einfache Möglichkeit geschaffen, die Ventilspindel manuell axial verschieben zu können und die damit verbundenen Ventilpositionen einstellen zu können.

Darüber hinaus ist es besonders bevorzugt, wenn das Ventilgehäuse eine ihm gegenüber axialverschiebliche Sperrhülse trägt, die einerseits - bevorzugt an ihrem einen axialen, dem Ventilbetätiger zugeneigten Ende - formschlüssig mit dem Ventilbetätiger interagiert und andererseits - bevorzugt an ihrem anderen axialen, dem Ventilbetätiger abgeneigten Ende - formschlüssig mit Sperrkugeln zum Arretieren eines Serviceventils in seiner angeschlossenen Position interagiert. Sie interagieren vorzugsweise derart, dass sich die Sperrhülse, solange kein Serviceventil an den Anschlussadapter angeschlossen ist, so gegen die Sperrkugeln abstützt, dass sie nicht weiter über die Sperrkugeln hinweg in axialer Richtung verschoben werden kann und dadurch einen Anschlag für den Ventilbetätiger bildet, der dessen weitere Axialverschiebung in Richtung des Ventilgehäuses unterbindet. So kann der Anschlussadapter nicht missbräuchlich geöffnet werden, wenn der Arbeiter sich beispielsweise nicht gewahr ist, dass hier ein sehr hoher Druck "lauert". Alternativ oder zusätzlich interagieren sie vorzugsweise derart miteinander, dass der Ventilbetätiger, solange ein Serviceventil angeschlossen ist und das erste Ventilelement noch nicht geschlossen ist, ein Verschieben der Sperrhülse in ihre Entriegelungsposition, in der sie eine Verlagerung der Sperrkugeln in radial auswärtiger Richtung erlaubt, verhindert. So ist es ausgeschlossen, dass ein Arbeiter bei unter Druck stehendem System durch entsprechendes Verschieben der Sperrhülse den Anschlussadapter aus seiner Verriegelung mit dem Serviceventil löst, das daraufhin bei einem hohen Innendruck explosionsartig davonfliegt. Die Sperrkugeln befinden sich bei nicht eingeschobenem Serviceventil bevorzugt in konischen Bohrungen, die radial einwärtig so eng werden, dass die Kugeln nie nach innen - in Richtung der Ventilachse - herausfallen können.

Es ist zudem besonders bevorzugt, wenn sich an dem Servokolben über ein Federelement, bevorzugt in Form einer Servokolbenfeder, eine Schiebehülse abstützt, die außenendseitig - bevorzugt an ihrem axialen Ende, welches auf der dem Serviceventil zugewandten Seite liegt - eine Schürze aufweist, welche ein Kugelgegenlager bildet, das, solange kein Serviceventil an den Anschlussadapter angekuppelt ist, zwischen ihm und der Sperrhülse die Sperrkugeln derart blockiert, dass die Sperrkugeln die Sperrhülse zwischen sich und dem Ventilbetätiger gefangen halten, und die Schiebehülse durch das Einschieben des Serviceventils so weit in Richtung des Servokolbens verschoben wird, dass die Schürze die Sperrkugeln zum Einlegen in die korrespondierende Sperrnut des Serviceventils freigibt. So wird ein einfacher und sicherer mechanischer Mechanismus geschaffen, um ein sicheres Ankoppeln des Serviceventils feststellen zu können um nur bei angekoppeltem Serviceventil diverse Vorgänge zu erlauben.

Außerdem ist es besonders bevorzugt, wenn die Sperrhülse gegenüber dem Ventilgehäuse, bevorzugt gegenüber des Ventilgehäuseunterteils, durch eine Feder vorgespannt ist, wobei die Gestaltung eine solche ist, dass die Sperrhülse mithilfe der besagten Feder - da die Sperrhülse durch die Feder nach unten in Richtung des Seviceventils gedrückt wird - die Sperrkugeln in radial einwärtiger Richtung in die Sperrnut des Serviceventils eindrückt und dort gefangen hält, sobald die Schiebehülse so weit in Richtung des Servokolbens verschoben worden ist, dass ihre Schürze die Sperrkugeln freigibt. So sichert die Feder auf einfache mechanische Weise noch zusätzlich das Serviceventil vor einem ungewollten Abkoppeln, da sie die Sperrhülse so nach unten drückt, dass sie die Sperrkugeln - bevorzugt über einen Absatz - sicher in der Sperrnut des Serviceventils hält.

Darüber hinaus ist es besonders bevorzugt, wenn die Schiebehülse einen bevorzugt hohlzylindrischen Abschnitt aufweist, in den der Servokolben dichtend eintaucht, um den Entlüftungspfad zu verschließen. So wird dem Servokolben auf einfache Art und Weise eine Möglichkeit geboten, um dort das Verschließen des Entlüftungspfades vorzunehmen.

Eine weitere bevorzugte Ausführungsform besteht darin, dass der Servokolben und die Schiebehülse über ein Wälzlager, regelmäßig in Gestalt eines Linearlagers, aneinandergelagert sind. Dieses Wälzlager ist besonders bevorzugt in Gestalt einer oder nach Art einer Kugel- bzw. Kugelumlaufhülse ausgeführt. Hierdurch wird die relative axiale Bewegung zwischen Servokolben und Schiebehülse zueinander erleichtert, auch unter hohem Druck. Idealerweise wird hierdurch ein Klemmen und/oder ruckartige Bewegungen zwischen beiden Bauteilen sowohl in axialer Richtung nach oben (in Richtung Ventilbetätiger) als auch in axialer Richtung nach unten (in Richtung Serviceventil) vermieden.

Außerdem ist es besonders bevorzugt, wenn die Schiebehülse einen Anschlag für den Servokolben ausbildet, der dessen weitere axiale Verlagerung in Richtung des Serviceventils verhindert. So kann auf einfache Art und Weise die Bewegungsfreiheit des Servokolbens begrenzt werden, wodurch das Blockieren des Entlüftungsweges definiert vonstattengehen kann.

Zudem ist es besonders bevorzugt, wenn die Schiebehülse die ihr vom Servokolben mitgeteilte Druckkraft auf die Sperrkugeln überträgt. So sichern die Sperrkugeln auf einfache mechanische Weise noch zusätzlich das Serviceventil vor einem ungewollten Abkoppeln, da so die Verriegelung des Serviceventils intensiviert wird.

Eine weitere bevorzugte Ausführungsform besteht darin, dass die Ventilspindel so gestaltet ist, dass sie einen Rastpunkt überfährt, der dem Benutzer bei der Betätigung des Ventilbetätigers haptisch mitteilt, dass er von nun an den Federventileinsatz aufstößt und/oder die Zwangsöffnung des Federventileinsatzes beendet, wobei der Rastpunkt vorzugsweise durch einen Rastkugelstift erzeugt wird, dessen Kugel sich vorübergehend in eine Ringnut der Ventilspindel einlegt. So kann dem Benutzer auf einfache Art und Weise eine haptische Warnmeldung mitgeteilt werden.

Darüber hinaus ist es besonders bevorzugt, wenn der Entlüftungspfad durch mindestens eine Querbohrung der Schiebehülse, mindestens eine Querbohrung im Ventilgehäuse und idealerweise ein weiterer Teil des Entlüftungspfades durch mindestens eine Querbohrung in der Sperrhülse gebildet wird, wobei die Querbohrung in der Sperrhülse idealerweise derart gegenüber dem Rest des Entlüftungspfades versetzt ist, dass zwischen dem Rest des Entlüftungspfades und der Querbohrung der Sperrhülse ein axialer Drosselspalt gebildet wird. Diese Drosselung des Drucks über diesen axialen Drosselspalt ist beispielsweise notwendig, wenn der Federventileinsatz wegen eines Fehlers nicht wieder richtig schließt. Dann sind größere Mengen Arbeitsfluid, die anfänglich unter hohem Überdruck stehen, über den Belüftungspfad abzublasen. Der angesprochene axiale Drosselspalt bietet hierbei eine einfache und sichere Möglichkeit, diesen hohen Druck abzubauen.

Weitere mögliche Ausgestaltungen, Funktionen und Vorteile ergeben sich aus den abhängigen Ansprüchen und/oder der nachfolgenden Beschreibung der beispielhaften Ausführungsform und/oder unter Bezugnahme auf die Figuren.

### FIGURENLISTE

Figur 1 zeigt den Anschlussadapter in geschnittener Frontansicht ohne Serviceventil.
Figur 2 zeigt den Anschlussadapter in geschnittener Frontansicht mit Serviceventil, das noch nicht eingesteckt wurde.
Figur 3 zeigt den Anschlussadapter in geschnittener Frontansicht beim Ankoppeln und Verriegeln eines Serviceventils.
Figur 4 zeigt den Anschlussadapter mit eingestecktem Serviceventil in geschnittener Frontansicht bei Öffnungsbeginn.
Figur 5 zeigt den Anschlussadapter mit eingestecktem Serviceventil in geschnittener Frontansicht beim vollständigen Öffnen.
Figur 6 zeigt den Anschlussadapter mit eingestecktem Serviceventil in geschnittener Frontansicht beim Beginn des Schließens.
Figur 7 zeigt den Anschlussadapter mit eingestecktem Serviceventil in geschnittener Frontansicht beim vollständigen Schließen.

### BEVORZUGTE AUSFÜHRUNGSFORM

### Der Anschlussadapteraufbau allgemein

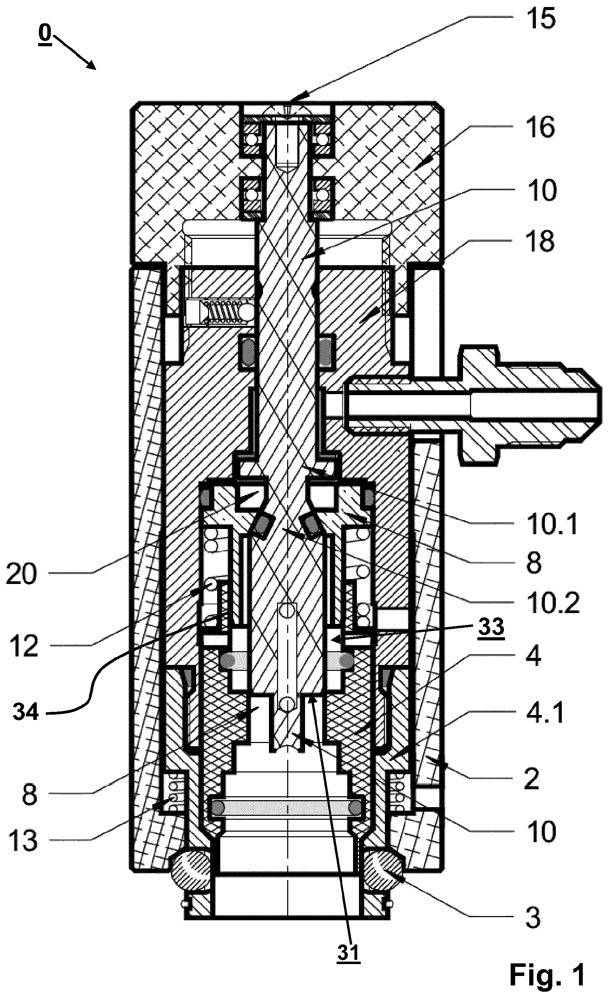

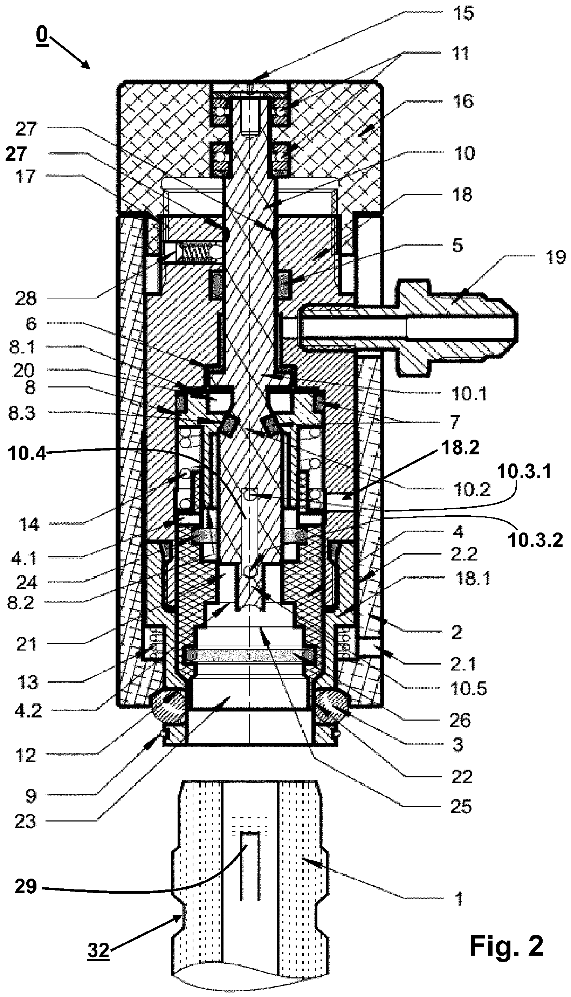

Die Fig. 1 und Fig. 2 zeigen die allgemeine, bevorzugte Ausgestaltung eines Anschlussadapters 0, wobei die Fig. 2 zur besseren Übersicht noch das Serviceventil 1 zeigt, welches später an den Anschlussadapter 0 angekoppelt wird. Das Ankoppeln des Serviceventils 1 und die verschiedenen Schaltstellungen des Anschlussadapters bei angekoppeltem Serviceventil 1 wird im weiteren Verlauf noch schrittweise erklärt. Zunächst wird jedoch auf die allgemeine Ausgestaltung der einzelnen Teile des Anschlussadapters 0 und auf das Serviceventil 1 eingegangen.

Das Serviceventil 1 ist hierbei bevorzugt ein Ventil einer Fremdanlage, an welche der Anschlussadapter 0 angeschlossen wird. Dieses Serviceventil 1 umfasst hierbei bevorzugt einen Federventileinsatz 29. Wird dieser Federventileinsatz 29, der meist eine Art Rückschlagventil bildet, nach unten - in das Serviceventil 1 hinein - gedrückt, wird der Strömungsweg des Serviceventils 1 freigegeben. Darüber hinaus umfasst das Serviceventil 1 an seiner Umfangsfläche zudem bevorzugt eine umlaufende Sperrnut 32, in welche später die Sperrkugeln 3 eingreifen können, was im späteren Verlauf noch genauer erläutert wird.

Der Anschlussadapter 0 selbst umfasst bevorzugt an einem axialen Ende einen Ventilbetätiger 16. Dieser Ventilbetätiger 16 umfasst bevorzugt an seiner inneren Umfangsfläche ein Gewinde 17 - bevorzugt in Gestalt eines Feingewindes. Dieses Gewinde 17 korrespondiert mit dem entsprechenden Gewinde 17 des Ventilgehäuses 18. Das Gewinde 17 des Ventilgehäuses 18 ist bevorzugt an einem Absatz am oberen axialen Ende (in Richtung Ventilbetätiger 16) des Ventilgehäuses 18 angebracht. Dieser Absatz dient einerseits als Träger für das Gewinde 17 und andererseits bevorzugt auch als Anschlag für den Ventilbetätiger 16 in vollständig eingeschraubtem Zustand. Das Ventilgehäuse 18 ist bevorzugt mehrteilig - im gezeigten bevorzugten Ausführungsbeispiel zweiteilig - ausgeführt. Das Ventilgehäuseunterteil 18.1 trägt hierbei die schon angesprochenen Konusbohrungen 12, welche die Sperrkugeln 3 tragen, solange das Serviceventil 1 nicht eingekuppelt ist. Der obere Teil des Ventilgehäuses 18 trägt bevorzugt in dem Bereich, in welchem sich der Servokolben 8 bewegt, mindestens eine Querbohrung 18.2, welcher Teil des Entlüftungspfades ist, welcher später noch genauer beleuchtet wird.

Es ist darüber hinaus bevorzugt, dass der obere Teil des Ventilgehäuses 18 einen gefederten Rastkugelstift 28, bevorzugt in einer entsprechenden Ausnehmung, trägt, welcher in eine bevorzugt umlaufende, korrespondierenden Ringnut der Ventilspindel 10 eingreifen kann. Ebenfalls bevorzugt im oberen Teil des Ventilgehäuses 18 befindet sich eine bevorzugt umlaufende Nut zur Aufnahme eines Dichtungselements 5 zwischen dem Ventilgehäuse 18 und der Ventilspindel 10. Darüber hinaus ist es weiterhin bevorzugt, wenn das Ventilgehäuse zumindest teilweise den Anschluss 19 der angeschlossenen Wartungsstation trägt, bevorzugt durch das Anbieten eines entsprechenden Gewindes.

Das Ventilgehäuseunterteil 18.1 umfasst zudem bevorzugt ein Anschlagelement 9 oder eine Nut, in welcher ein Anschlagelement 9 befestigt ist. Dieses Anschlagelement 9 ist bevorzugt unterhalb (axial entlang der Ventilachse 15 Richtung Serviceventil 1) der Konusbohrungen 12 lokalisiert.

Das Ventilgehäuseunterteil 18.1 umfasst zudem bevorzugt einen Absatz, an welchem sich eine Feder 13, bevorzugt in Gestalt einer Druckfeder, abstützen kann.

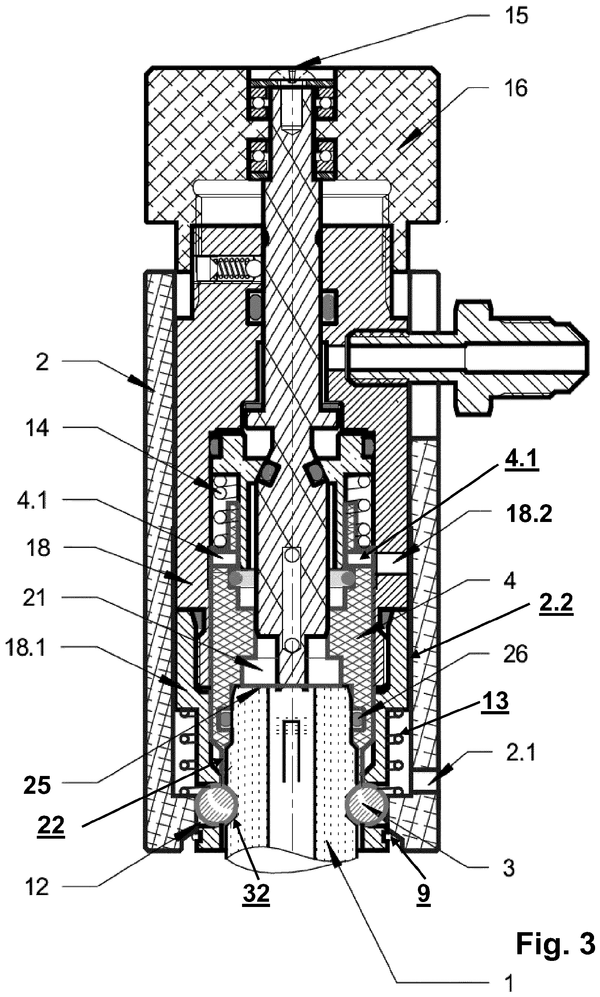

Die andere Seite, an der sich die entsprechende Feder 13 abstützen kann, befindet sich bevorzugt an einem Absatz einer Sperrhülse 2, welche des Ventilgehäuse 18 bevorzugt zumindest teilweise umschließt. Dieser angesprochene Absatz geht bevorzugt in eine bevorzugt umlaufende Nut über, die die Sperrkugeln 3 im gezeigten, nicht ausgelösten Zustand der Sperrhülse zusätzlich teilweise abstützen. Der entsprechende Absatz interagiert im ausgelösten Zustand der Sperrhülse 2 (siehe Figur 3) derart mit dem Anschlagelement 9, dass es einen unteren Anschlag für die ausgelöste Sperrhülse 2 bietet, die von der Federkraft der Feder 13 nach unten (axial entlang der Ventilachse 15 Richtung Serviceventil 1) gedrückt wird. In diesem ausgelösten Zustand (seihe Fig. 3) bietet der Absatz zudem eine weitere Abstützung der Sperrkugeln 3 gegen ein radiales Verschieben von der Ventilachse 15 weg, da die Sperrkugeln 3 im ausgelösten Zustand der Sperrhülse 2 in den Konusbohrungen 12 nach innen (zur Ventilachse 15 hin) verschoben wurden.

Die Fig. 3 und dieses "Einschnappen" der Sperrhülse 2 werden in einem späteren Abschnitt noch genauer erklärt.

Bevorzugt oberhalb (axial entlang der Ventilachse 15 Richtung Ventilbetätiger 16) des Absatzes der Sperrhülse 2 umfasst die Sperrhülse 2 mindestens eine Querbohrung 2.1, welche Teil des Entlüftungspfades ist. Darüber hinaus umfasst die Sperrhülse 2 bevorzugt innenseitig eine bevorzugt ringförmig umlaufende Ausnehmung, welche als axialer Drosselspalt 2.2 zwischen Sperrhülse 2 und Ventilgehäuse 18 fungiert, wobei der axiale Drosselspalt 2.2 ebenfalls Teil des Entlüftungspfades ist. Bevorzugt an dem entgegengesetzten axialen Ende, an welchem sich der angesprochene Absatz befindet, wirkt das Ende der Sperrhülse 2 bevorzugt als Anschlag für den Ventilbetätiger 16; einerseits im nicht ausgelösten Zustand der Sperrhülse 2 und andererseits im ausgelösten Zustand der Sperrhülse bei voll eingeschraubtem Ventilbetätiger 16. Hierfür umfasst der Ventilbetätiger 16 bevorzugt einen weiteren außenseitig umlaufenden Absatz, der entsprechend mit der Sperrhülse 2 interagiert.

Im Inneren des Ventilgehäuses 18 befindet sich bevorzugt der Servokolben 8, welcher einen axialen Bewegungsweg innerhalb des Ventilgehäuses 18 zurücklegen kann. Gegenüber dem Ventilgehäuse 18 ist der Servokolben 8 bevorzugt mittels eines Dichtungselements 7 abgedichtet. Der Servokolben 8 läuft hierbei zumindest teilweise axial innerhalb einer Schiebehülse 4, bevorzugt innerhalb eines hohlzylindrischen Abschnitts 33 der Schiebehülse 4. Die Abdichtung zwischen der Schiebehülse 4 und dem Servokolben 8 - wenn sich der Servokolben 8 in der entsprechenden Position befindet, in welcher der Entlüftungspfad blockiert wird - erfolgt bevorzugt über ein Dichtungselement 24. Die Schiebehülse 4 umfasst bevorzugt mindestens eine Querbohrung 4.1, die Teil des Entlüftungspfades ist. Diese mindestens eine Querbohrung 4.1 kann von dem Servokolben 8, bevorzugt von einem Absatz des Servokolbens 8 blockiert werden, wodurch der gesamte Entlüftungspfad blockiert wird. Bevorzugt zwischen einem Absatz des Servokolbens 8 und dem Absatz der Schiebehülse 4 befindet sich eine Servokolbenfeder 14. Die Schiebehülse 4 umfasst zudem bevorzugt die Ventilaufnahme 23 für das Serviceventil 1 und eine Schürze 22, welche später noch genauer beleuchtet wird.

Bevorzugt im Inneren des Servokolbens 8 und der Schiebehülse 4 läuft die Ventilspindel 10, welche durch den Ventilbetätiger 16 axial nach oben und unten (entlang der Ventilachse 15) verschoben werden kann. Die Ventilspindel 10 umfasst hierbei bevorzugt ein erstes Ventilelement 10.1, welches bevorzugt tellerförmig ausgebildet ist. Dieses erste Ventilelement 10.1 umfasst bevorzugt ein Dichtungselement 6, welches das erste Ventilelement 10.1 gegenüber dem Ventilgehäuse 18 abdichtet. Bevorzugt umfasst der Servokolben 8 eine entsprechend tellerförmige Ausnehmung, in welcher das erste Ventilelement 10.1 zumindest teilweise aufgenommen werden kann und womit der Servokolben 8 gegen die Federkraft der Servokolbenfeder 14 bewegt werden kann. Diese tellerförmige Ausnehmung ist bevorzugt auch Teil des Servoraums 20, worauf in den späteren Abschnitten noch näher eingegangen wird.

Der Servokolben 8 umfasst zudem bevorzugt eine Dichtfläche 8.3, welche bevorzugt derart mit dem zweiten Ventilelement 10.2 beziehungsweise einem Dichtungselement 7 an dem zweiten Ventilelement interagiert, dass der Servokolben 8 an dem zweiten Ventilelement 10.2 dichtend am Ventilsitz sitzen kann. Die Dichtfläche 8.3 des Servokolbens 8 ist bevorzugt schräg ausgeführt und bevorzugt analog zur Schrägung des zweiten Ventilelements 10.2. Am unteren axialen Ende (Ende in Richtung des Serviceventils 1) umfasst die Ventilspindel 10 zudem bevorzugt einen Niederhalter 10.5, welcher über einen Bund 31 bevorzugt in die restliche Ventilspindel 10 übergeht. Dieser Bund 31 dient der geforderten Selbstausrichtungsfunktion des Niederhalters 10.5. Diese "Selbstausrichtung" wird bevorzugt durch die Interaktion des Bundes 31 mit einer Einschnürung des radialen Querschnitts der Schiebehülse 4 erreicht.

Um den Raum unterhalb dieses Bundes 31 - welcher der Totraum 21 oder Teil des Totraums 21 sein kann - quasi mit dem Inneren des Servokolbens 8 und der Schiebehülse - welcher der Servoraum 20 oder Teil des Servoraums 20 sein kann - zu verbinden, um dort - je nach Ventilstellungen - den Strömungsweg in ausreichendem Querschnitt zum Anschluss 19 zu gewährleisten oder auch um die Entlüftung über den Entlüftungspfad durchzuführen, umfasst die Ventilspindel 10 in ihrem Inneren einen Strömungsweg. Hierzu umfasst der Niederhalter 10.5 bevorzugt eine erste Radialbohrung 10.3.1, die über eine mit ihr verschnittene Axialbohrung 10.4 in eine damit verschnittene zweite Radialbohrung 10.3.2 in der Ventilspindel 10 selbst übergeht. Alternativ kann der Bund 31 mit parallel zur Ventilachse 15 verlaufenden Strömungskanälen auf der Zylinderoberfläche ausgebildet werden, um den beschriebenen Strömungsweg in ausreichendem Querschnitt sicherzustellen.

Zwischen dem Servokolben 8 und der Schiebehülse 4 kann ein Wälzlager 34 vorhanden sein, bevorzugt in Form einer Kugelhülse, um die Relativbewegung beider Teile zueinander zu erleichtern. Im Folgenden werden zudem zur besseren Übersicht einzelne Positionen und Schritte bei der Verwendung der Anschlussarmatur 0 gezeigt, die das Ankoppeln des Serviceventils 1 und das Öffnen und Schließen des Anschlussadapters 0 beschreiben.

### Ankoppeln und Verriegeln eines Serviceventils 1 (siehe Fig. 3)

Figur 3 zeigt schließlich den Anschlussadapter 0 genau in dem Moment, nachdem dieser an das Serviceventil 1 angeschlossen wurde. Direkt während des Anschließens an das Serviceventil 1 erfolgt eine Druckentlastung des Totraumes 21 über die in Reihe angeordneten Entlüftungsbohrungen des Entlüftungspfades, um ein Abblasen des Anschlussadapters 0 zu verhindern, falls ein entsprechender Druck den Anschlussadapter 0 dazu veranlassen würde. Diese Entlüftungsbohrungen sind chronologisch die Querbohrung 4.1 der Schiebehülse 4, die Querbohrung 18.2 des Ventilgehäuses 18 und die Querbohrung 2.1 der Sperrhülse 2. Zwischen der Querbohrung 18.2 und der Querbohrung 2.1 befindet sich bevorzugt ein axialer Drosselspalt 2.2 zum sicheren Entlüften auch bei hohen Drücken.

Im Zuge des Einsteckens des Serviceventils 1 wird die Schiebehülse 4 mit der Ventilaufnahme 23 entlang der Ventilachse 15 und gegen die Kraft der Servokolbenfeder 14 in eine definierte Lage in Richtung Ventilbetätiger 16 geschoben.

Die Abdichtung des Serviceventiles 1 zum Totraum 21 wird bevorzugt durch die Ventildichtung 26 gewährleistet, indem die Dichtfläche 25 der Schiebehülse 4 so ausgebildet ist, dass das Serviceventil 1 so an der Dichtfläche 25 anliegt, dass die Ventildichtung 26 sicher an der dafür vorgesehenen umlaufenden Fläche des Serviceventils 1 anliegen kann.

Vorteilhaft kann die Ventildichtung 26 als D-Ring ausgebildet werden, um das Risiko eines Spiralversagens zu eliminieren.

Wie schon erwähnt, sind in den radialen Konusbohrungen 12, die bevorzugt in das Ventilgehäuseunterteil 18.1 des Ventilgehäuses 18 eingebracht sind, jeweils Sperrkugeln 3 eingesetzt. Durch das Einschieben des Serviceventils 1 gibt die Schiebehülse 4 - und hierbei bevorzugt die Schürze 22 der Schiebehülse 4 - die Konusbohrungen 12 frei, wodurch die Sperrkugeln 3 durch die mit der Kraft der Servokolbenfeder 14 beaufschlagte Schiebehülse 4 in die umlaufende Sperrnut 32 - bevorzugt in Gestalt einer Ringnut - des Serviceventiles 1 gedrückt und in dieser Stellung blockiert werden.

Sofern die Schiebehülse 4 ohne Serviceventil 1 in das Ventilgehäuse 18 bis zur Freigabe der Konusbohrungen 12 geschoben werden würde, blockieren die Sperrkugeln 3 das Einstecken des Serviceventiles 1.

Dadurch, dass die Sperrkugeln 3 nun die Sperrhülse 2 nicht mehr blockieren, schnappt die Sperrhülse 2 durch die Federkraft der Feder 13 axial nach unten (in Richtung des Serviceventils 1) ein und wird dort durch die Federkraft auch gehalten. Dieses "Einschnappen" erfolgt axial nach unten bis zu dem Anschlagelement 9. Hierdurch werden die Sperrkugeln 3 nochmals weiter in die Sperrnut 32 des Serviceventils 1 gedrückt und dort verriegelt. Im Allgemeinen ist in diesem gezeigten Zustand das Serviceventil nun fest mit dem Anschlussadapter 0 verriegelt. Durch das "Einschnappen" der Sperrhülse 2 wird zudem der Ventilbetätiger 16 freigegeben, da dieser nun vorerst nicht mehr von der Sperrhülse 2 an seiner Drehung gehindert wird.

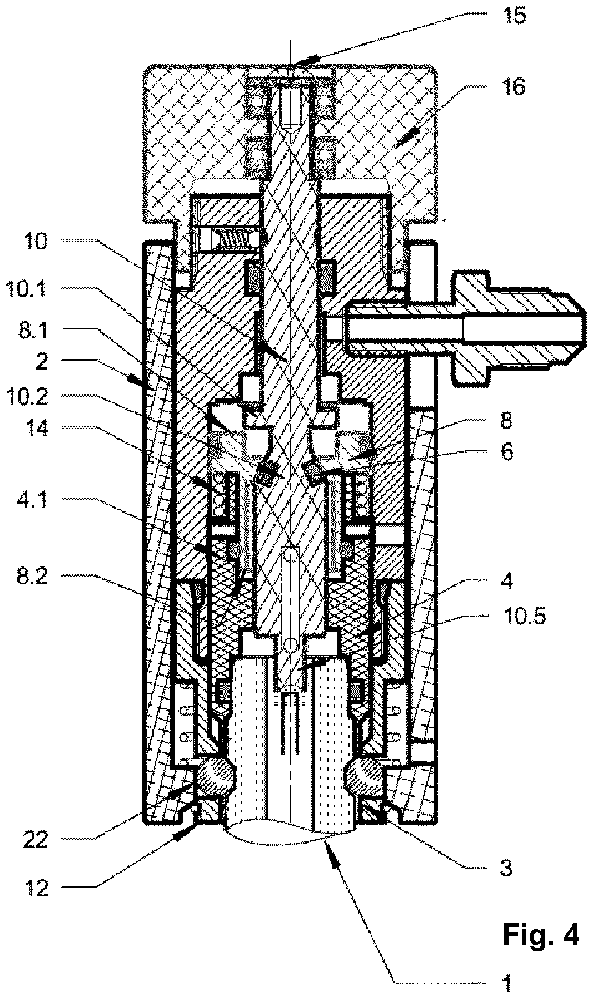

### Öffnungsbeginn (siehe Fig. 4)

Durch das Drehen des Ventilbetätigers 16 bevorzugt im Uhrzeigersinn wird die Ventilspindel 10 entlang der Ventilachse 15 nach unten (Richtung Serviceventil) verschoben. Dabei verhindern Wälzlager 11, bevorzugt in Gestalt von Kugellagern, die Übertragung der Drehbewegung des Ventilbetätigers 16 auf die Ventilspindel 10 mit dem ersten Ventilelement 10.1, dem zweiten Ventilelement 10.2, dem Niederhalter 10.5 sowie den Servokolben 8. So können sich die Dichtelemente der beiden Ventilelemente 10.1 und 10.2 und des Servokolbens 8 ohne Drehbewegung ausschließlich in axialer Richtung bewegen.

Figur 4 zeigt, wie durch die Drehung des Ventilbetätigers 16 das erste Ventilelement 10.1 geöffnet ist, während das zweite Ventilelement 10.2 noch geschlossen bleibt.

Die im Servoraum 20 wirkende Kraft auf die druckbeaufschlagte Fläche 8.1 des Servokolbens 8 - wenn das erste Ventilelement 10.1 geöffnet ist und über den Anschluss 19 Druck im Servoraum 20 vorherrscht - verstärkt die Dichtwirkung des Dichtungselements 6 an der Dichtfläche 8.3, während gleichzeitig die Entlüftungsbohrung 4.1 durch die axiale, druckgeführte Bewegung des Servokolbens 8 sicher verschlossen wird. Der Totraum 21 ist somit hermetisch gekapselt. Der Weg des Servokolbens 8 wird hierbei durch den Anschlag an der Schiebehülse 4 begrenzt, welche durch das aufgesteckte Serviceventil 1 in seiner Lage arretiert ist.

Durch die wirkende Kraft auf die druckbeaufschlagte Fläche 8.1 des Servokolbens 8 wird die Schiebehülse 4 auf die Sperrkugeln 3 in den Konusbohrungen 12 gepresst. Durch diese mit steigendem Systemdruck stärker wirkende Kraft werden die Sperrkugeln 3 bevorzugt permanent gegen die Schürze 22 der Sperrhülse 2, wobei die Schürze 22 als Kugelgegenlager wirkt, gepresst und dadurch die Sperrhülse 2 in dieser Position verriegelt.

Das Verhältnis der druckbeaufschlagten Flächen 8.1 und 8.2 des Servokolbens 8 und die Kraft der Servokolbenfeder 14 sind vorteilhaft so gewählt, dass der Servokolben 8 bei einem Systemdruck, welcher größer als der Grenzdruck ist (bevorzugt >=1 MPa) gegen die Kraft der Servokolbenfeder 14 auf die Dichtfläche 8.3 des zweiten Ventilelementes 10.2 und/oder auf den Anschlag der Schiebehülse 4 gepresst wird.

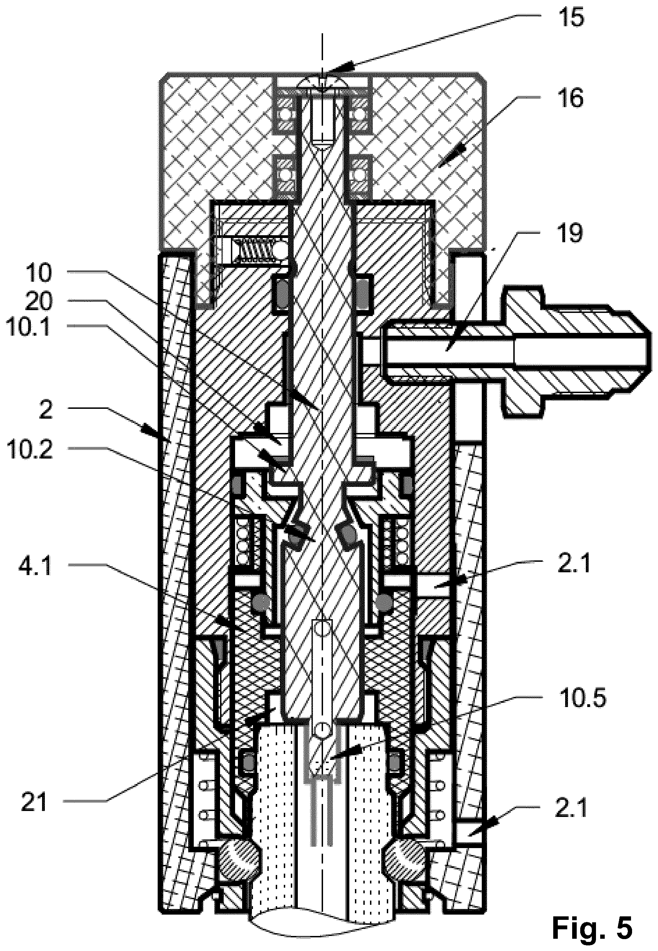

### Vollständiges Öffnen (siehe Fig. 5)

Die Ventilspindel 10 wird durch weiteres Drehen des Ventilbetätigers 16 bis zum Anschlag im Uhrzeigersinn entlang der Ventilachse 15 in Richtung Serviceventil 1 verschoben, wodurch auch das zweite Ventilelement 10.2 geöffnet und der Strömungsweg zwischen Servoraum 20 und Totraum 21 hergestellt wird.

Gleichlaufend wird der Federventileinsatz 29 des Serviceventils 1 durch den Niederhalter 10.5 gedrückt und dadurch der Strömungsweg zwischen dem Totraum 21 und der Fremdanlage, welche das Serviceventil 1 umfasst, hergestellt. Der Strömungsweg zwischen Anschluss 19 über das erste Ventilelement 10.1, zweite Ventilelement 10.2 und Serviceventil 1 ist für die Evakuierung und/oder Befüllung einer Fremdanlage somit hergestellt.

Durch die vorteilhafte Gestaltung der Länge der Sperrhülse 2 und des möglichen Bewegungsraumes der Sperrhülse 2 in axialer Richtung entlang der Ventilachse 15 kann eine Entkopplung von dem Serviceventil 1 nur erfolgen, wenn der Ventilbetätiger 16 vollständig - bevorzugt durch Drehen gegen den Uhrzeigersinn - in die Endposition gebracht wurde und beide Ventilelemente 10.1 und 10.2 der Ventilspindel 10 vollständig geschlossen sind. Dadurch entsteht eine doppelte Sicherheit gegen das Entkoppeln von einem Serviceventil 1, da in dieser (oberen) Position des Ventilbetätigers 16 der Entlüftungspfad über die Entlüftungsbohrungen zwingend geöffnet ist.

Allgemein ist die Ausbildung eines Kugelgegenlagers durch die Schürze 22 an der Sperrhülse 2 bevorzugt. Bei geöffneten Ventilelementen 10.1 und 10.2 sowie Beaufschlagung des Servokolbens 8 mit Druck wird durch die kraftschlüssige Verbindung über die Schiebehülse 4, die Sperrkugeln 3 und das Kugelgegenlager die Sperrhülse 2 gehindert, entlang der Ventilachse 15 in Richtung des Ventilbetätigers 16 verschoben zu werden, so dass die Verriegelung fixiert bleibt. Gegebenenfalls kann dadurch die Sperrhülse 2 auch so ausgebildet sein, dass der mechanische Anschlag am geöffneten Ventilbetätiger 16 entfallen kann. Das aufgesteckte Serviceventil 1 ist dadurch sicher mit dem Anschlussadapter 0 gekoppelt.

Ein nicht korrekt schließendes Serviceventil 1 an einem zumindest teilweise mit Kältemittel beaufschlagten Kreislauf wird durch Ausströmen des Kältemittels über den Totraum 21 und den Entlüftungspfad erkannt.

Soll die Anschlussarmatur gleichfalls zum Evakuieren eingesetzt werden, ist das erste Ventilelement 10.1 derart auszuführen, dass beim Öffnen des Anschlussadapters 0 das erste Ventilelement 10.1 den Servokolben 8 zwingend gegen die Federkraft der Servokolbenfeder 14 nach unten führt, um die Entlüftungsbohrung 4.1 zu schließen, bevor der Evakuiervorgang eingeleitet wird.

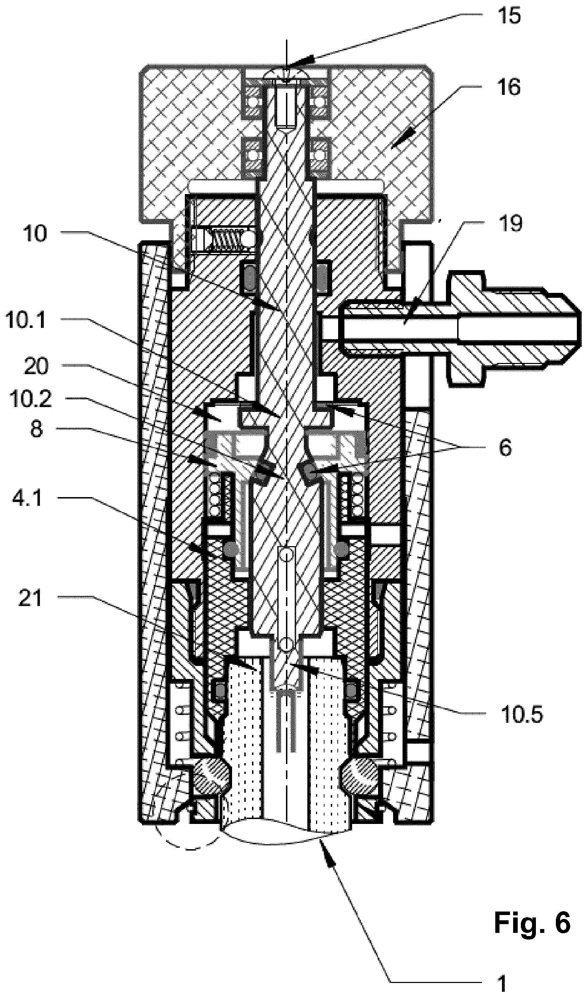

### Beginn des Schließens (siehe Fig. 6)

Von dem in Figur 5 gezeigten vollständig geöffneten Zustand kann nun das Schließen des Anschlussadapters 0 eingeleitet werden. Durch Drehen des Ventilbetätigers 16 entgegen dem Uhrzeigersinn wird die Ventilspindel 10 entlang der Ventilachse 15 in Richtung Ventilbetätiger 16 verschoben. Zunächst schließt das zweite Ventilelement 10.2.

Der druckbeaufschlagte Servokolben 8 erzeugt die notwendige Gegenkraft an der Dichtfläche 8.3. Der Niederhalter 10.5 hebt vom Federventileinsatz 29 des Serviceventils 1 ab.

Der Strömungsweg zwischen Totraum 21 und angeschlossenem (Kälte-)Kreislauf und zwischen Servoraum 20 und Totraum 21 wird unterbrochen. Der Entlüftungspfad ist weiterhin verschlossen.

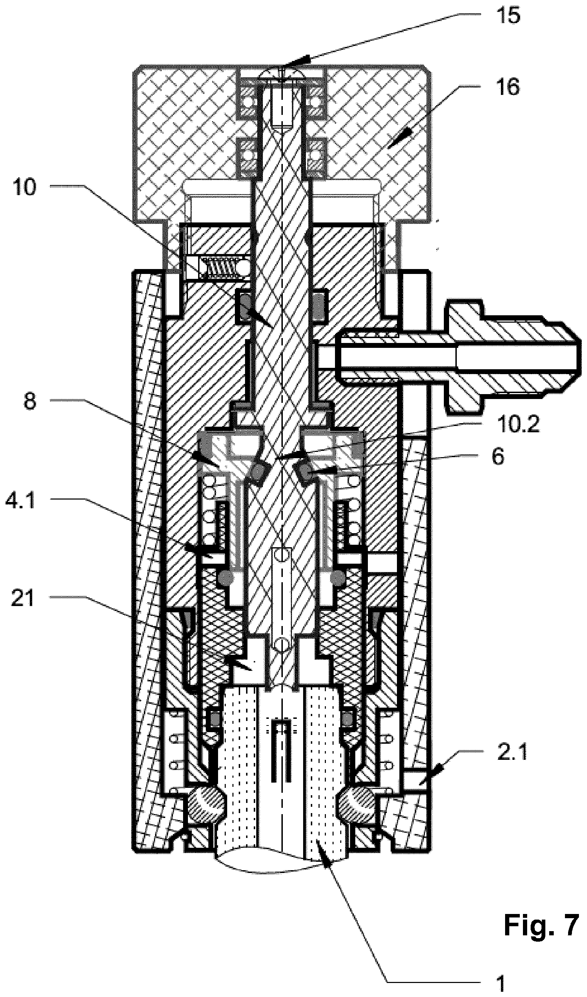

### Vollständiges Schließen (siehe Fig. 7)

Durch weiteres Drehen des Ventilbetätigers 16 entgegen dem Uhrzeigersinn bis zum Anschlag wird die Ventilspindel 10 weiter entlang der Ventilachse 15 in Richtung Ventilbetätiger 16 verschoben. Das zweite Ventilelement 10.2 bleibt geschlossen und das erste Ventilelement 10.1 schließt ebenfalls. Der Servokolben 8 wird durch das zweite Ventilelement 10.2 ebenfalls nach oben bewegt und die Querbohrung 4.1 wird freigegeben. Der Strömungsweg zwischen Servoraum 20 und Totraum 21 ist unterbrochen. Der Druck im Totraum 21 wird durch den geöffneten Entlüftungspfad abgebaut und ein undichter Federventileinsatz 29 im Serviceventil 1 könnte dadurch erkannt werden, dass konstant das druckbeaufschlagte Medium aus dem Entlüftungspfad an die Umgebung ausströmt.

Im Weiteren können Rückschlüsse auf nicht korrekt schließende Federventileinsätze 29 im Serviceventil 1 oder auf ein defektes Dichtungselement 6 geschlossen werden.

### Entkoppeln des Serviceventils (wenn kein Medium ausströmt)

Erst wenn der Ventilbetätiger 16 vollständig bis zum Anschlag entgegen dem Uhrzeigersinn gedreht wurde, kann die Sperrhülse 2 entgegen der Kraft der Spannfeder 13 manuell in Richtung Ventilbetätiger 16 verschoben werden. Die Sperrkugeln 3 werden durch die Kraft der Servokolbenfeder 14 über den Kraftschluss mit der Schiebehülse 4 aus der Sperrnut 32 des Serviceventiles 1 gedrückt. Die Schiebehülse 4 presst das Serviceventil 1 aus dem Anschlussadapter 0, sodass dieses entfernt werden kann und der Ausgangszustand wieder erreicht ist.

Einige Varianten von Wartungsstationen bauen den Druck nach Abschluss eines Befüllvorgangs über die Wartungsstation und nicht über den Anschlussadapter ab. Aus diesem Grund ist es bevorzugt, wenn der Anschlussadapter 0 auch an diese Ausführung angepasst werden kann.

Das Schließen des Anschlussadapters 0 wird in zwei Phasen unterteilt. Der Übergang von der beginnenden Schließphase zur abschließenden Phase wird bevorzugt durch eine merklich erkennbare, bevorzugt haptische Rückmeldung am Ventilbetätiger 16 signalisiert.

Die beginnende Phase dient dem Unterbrechen des Strömungsweges zwischen Serviceventil 1 und Totraum 21.

Durch Drehen des Ventilbetätigers 16 entgegen dem Uhrzeigersinn wird der Niederhalter 10.5 vom Stift des Federventileinsatzes 29 im gekoppelten Serviceventil 1 abgehoben, wodurch der Strömungsweg zum am Serviceventil 1 angeschlossenen Kreislauf unterbrochen wird. Der dazu notwendige Hub ist entsprechend dem jeweiligen Kältemittel per Norm definiert.

Beispielhaft ist dieser Vorgang bei dem Kältemittel R744 nach einem Hub der Ventilspindel 10 mit dem Niederhalter 10.5 von 2,5 mm sicher abgeschlossen. Beim Erreichen dieses Punktes erfolgt die beschriebene Rückmeldung bevorzugt durch eine spürbare Erhöhung des Widerstandes beim Drehen des Ventilbetätigers 16 entgegen dem Uhrzeigersinn. Dazu ist am definierten Punkt bevorzugt eine umlaufende Nut, bevorzugt in Form einer Ringnut 27, an der Ventilspindel 10 vorhanden. Die Erhöhung des Widerstandes wird durch ein Rastkugelstift 28 hervorgerufen, welcher quer zur Ventilspindel 10 in das Ventilgehäuse 18 eingesetzt ist und gegen den Schaft der Ventilspindel 10 drückt.

Wird ein Anschlussadapter 0 an eine Wartungsstation angeschlossen, bei der der Druck über diese Wartungsstation abgebaut werden soll, unterbricht der Bediener die Drehbewegung des Ventilbetätigers 16 und startet die Entlüftung am angeschlossenen Fluidsystem.

Der Strömungsweg zwischen Servoraum 20 und Anschluss 19 ist offen, so dass der Überdruck aus dem Servoraum 20 entweichen kann. Bei sich erniedrigender Kraft an der ersten druckbeaufschlagten Fläche 8.1 des Servokolbens 8 wird dieser durch eine auf die zweite druckbeaufschlagte Fläche 8.2 wirkende Kraft und die Kraft der Servokolbenfeder 14 an den oberen Anschlag bewegt.

Dadurch öffnet das zweite Ventilelement 10.2. Gleichlaufend wird die Entlüftungsbohrung 4.1 durch den Servokolben 8 frei gegeben. Der Überdruck im Totraum 21 wird über die Ventilelemente 10.1 und 10.2 zum Anschluss 19 sowie über die in Reihe geschalteten Querbohrungen 4.1, 2.1 und 18.2 des Entlüftungspfades abgebaut.

### Weitere Ausführungsform

Diese (weitere) Ausführungsform entspricht der vorher beschriebenen Ausführungsform bzw. den vorher beschriebenen Ausführungsformen und unterscheidet sich nur dadurch, dass der Anschlussadapter 0 kein erstes Ventilelement 10.1 aufweist. Das Ventilelement 10.1 ist in dieser Ausführungsform nicht notwendig. Die sonstigen Merkmale bzw. die vorteilhaften und bevorzugten Merkmale, die im Zusammenhang mit der vorher beschriebenen Ausführungsform bzw. den vorher beschriebenen Ausführungsformen beschrieben sind, gelten auch für diese (weitere) Ausführungsform und sind entsprechend vorteilhaft bzw. bevorzugt, und werden auch für diese weitere Ausführungsform mit beansprucht.

Insbesondere wird somit auch unabhängiger Schutz für einen Anschlussadapter 0 zum An- und Abdocken einer Wartungsstation an ein Serviceventil 1 einer Fremdanlage, in der ein Arbeitsfluid in einem geschlossenen Kreislauf zirkuliert, insbesondere einer Klimaanlage mit einem Anschluss 19, über den zum Befüllen unter Druck stehendes Arbeitsfluid aus der Wartungsstation in den Anschlussadapter 0 eingespeist werden kann oder über den unter Druck stehendes Arbeitsfluid ausgeschleust werden kann mit einem auch bei an den Anschlussadapter 0 angekoppeltem Serviceventil 1 über einen Entlüftungspfad belüfteten Totraum 21, mit einem fluidisch mit dem Anschluss 19 verbindbaren Servoraum 20, in dem ein Servokolben 8 zum Öffnen und Schließen des Entlüftungspfades aufgenommen ist, den ein im Servoraum 20 anstehender Überdruck in Richtung seiner den Entlüftungspfad schließenden Position drängt, und mit einer Ventilspindel 10, die ein Ventilelement 10.2 betätigt (das Ventilelement 10.2 wird in der weiter oben beschriebenen Ausführungsform als zweites Ventilemelemt beschrieben), wobei die Ventilspindel 10, kein Ventilelement 10.1 (das Ventilelement 10.1 wird in der weiter oben beschriebenen Ausführungsform als erstes Ventilemelemt beschrieben) betätigt, das so gestaltet und positioniert ist, dass es bei Bewegung der Ventilspindel 10 zum Aufstoßen des Serviceventils 1 den Servoraum 20 fluidisch mit dem Anschluss 19 verbindet, und das Ventilelement 10.2 (hier, das zweite Ventilelement 10.2) so gestaltet und positioniert ist, dass es erst öffnet und den Totraum 21 fluidisch mit dem Servoraum 20 verbindet, nachdem der Servokolben 8 eine den Entlüftungspfad schließende Position erreicht hat, und mit einem Niederhalter 10.5 zum Öffnen des einen Bestandteil des Serviceventils 1 bildenden Federventileinsatzes 29, der so gestaltet und angeordnet ist, dass er den Federventileinsatz 29 erst öffnet, nachdem der Servokolben 8 eine den Entlüftungspfad schließende Position erreicht hat.

Vorteilhaft ist so ein Anschlussadapter 0 zum An- und Abdocken einer Wartungsstation an ein Serviceventil 1 einer Fremdanlage ohne ein Ventilelement 10.1 beansprucht, wobei das Ventilelement 10.1 in der weiter oben beschriebenen Ausführungsform als erstes Ventilelement beschrieben ist. Diese Ausführungsform lässt sich somit wie die weiter oben beschriebene Ausführungsform beschreiben, nur eben ohne das erste Ventilelement 10.1.

Vorteilhaft betätigt die Ventilspindel 10 des Anschlussadapters 0 nur ein einziges Ventilelement 10.2 (wobei das Ventilelement 10.2 in der weiter oben beschriebenen Ausführungsform als zweites Ventilelement beschrieben ist), wobei das Ventilelement 10.2 so gestaltet und positioniert ist, dass es erst öffnet und den Totraum 21 fluidisch mit dem Servoraum 20 verbindet, nachdem der Servokolben 8 eine den Entlüftungspfad schließende Position erreicht hat.

Vorteilhaft ist der Servoraum 20 fluidisch mit dem Anschluss 19 verbunden, bevor das Ventilelement 10.2 erst öffnet und den Totraum 21 fluidisch mit dem Servoraum 20 verbindet, nachdem der Servokolben 8 eine den Entlüftungspfad schließende Position erreicht hat.

### REFERENZLISTE

- 0: Anschlussadapter
- 1: Serviceventil
- 2: Sperrhülse
- 2.1: Querbohrung der Sperrhülse
- 2.2: Axialer Drosselspalt
- 3: Sperrkugel
- 4: Schiebehülse
- 4.1: Querbohrung der Schiebehülse
- 5: Dichtungselement
- 6: Dichtungselement
- 7: Dichtungselement
- 8: Servokolben
- 8.1: Erste druckbeaufschlagte Fläche
- 8.2: Zweite druckbeaufschlagte Fläche
- 8.3: Dichtfläche Servokolben
- 9: Anschlagelement
- 10: Ventilspindel
- 10.1: Erstes Ventilelement
- 10.2: Zweites Ventilelement
- 10.3.1: Erste Radialbohrung (oben)
- 10.3.2: Zweite Radialbohrung (unten)
- 10.4: Axialbohrung (Verbindung der Radialbohrungen)
- 10.5: Niederhalter
- 11: Wälzlager
- 12: Konusbohrung
- 13: Feder
- 14: Servokolbenfeder
- 15: Ventilachse
- 16: Ventilbetätiger
- 17: Gewinde zwischen Ventilgehäuse und Ventilbetätiger
- 18: Ventilgehäuse
- 18.1: Ventilgehäuseunterteil
- 18.2: Querbohrung in Ventilgehäuse
- 19: Anschluss
- 20: Servoraum
- 21: Totraum
- 22: Schürze (Kugelgegenlager)
- 23: Ventilaufnahme
- 24: Dichtungselement
- 25: Dichtfläche
- 26: Ventildichtung
- 27: Ringnut
- 28: Rastkugelstift
- 29: Federventileinsatz des Serviceventils
- 30: nicht vergeben
- 31: Bund zur Selbstausrichtung des Niederhalters
- 32: Sperrnut des Serviceventils
- 33: Hohlzylindrischer Abschnitt der Schiebehülse
- 34: Wälzlager

## Patentansprüche

1. Anschlussadapter (0) zum An- und Abdocken einer Wartungsstation an ein Serviceventil (1) einer Fremdanlage, in der ein Arbeitsfluid in einem geschlossenen Kreislauf zirkuliert, insbesondere einer Klimaanlage mit einem Anschluss (19), über den zum Befüllen unter Druck stehendes Arbeitsfluid aus der Wartungsstation in den Anschlussadapter (0) eingespeist werden kann oder über den unter Druck stehendes Arbeitsfluid ausgeschleust werden kann,
mit einem auch bei an den Anschlussadapter (0) angekoppeltem Serviceventil (1) über einen Entlüftungspfad belüfteten Totraum (21),
mit einem fluidisch mit dem Anschluss (19) verbindbaren Servoraum (20), in dem ein Servokolben (8) zum Öffnen und Schließen des Entlüftungspfades aufgenommen ist, wobei den Servokolben (8) ein im
Servoraum (20) anstehender Überdruck in Richtung seiner den Entlüftungspfad schließenden Position drängt,
und mit einer Ventilspindel (10), die ein Ventilelement (10.2) betätigt,
wobei das Ventilelement (10.2) so gestaltet und positioniert ist, dass es erst öffnet und den Totraum (21) fluidisch mit dem Servoraum (20) verbindet, nachdem der Servokolben (8) eine den Entlüftungspfad schließende Position erreicht hat,
und mit einem Niederhalter (10.5) zum Öffnen eines einen Bestandteil des Serviceventils (1) bildenden Federventileinsatzes (29), wobei der Niederhalter (10.5) so gestaltet und angeordnet ist, dass er den Federventileinsatz (29) erst öffnet, nachdem der Servokolben (8) eine den Entlüftungspfad schließende Position erreicht hat.

2. Anschlussadapter (0) zum An- und Abdocken einer Wartungsstation an ein Serviceventil (1) einer Fremdanlage, in der ein Arbeitsfluid in einem geschlossenen Kreislauf zirkuliert, nach Anspruch 1,
**dadurch gekennzeichnet, dass** die Ventilspindel (10), ein erstes Ventilelement (10.1) und ein zweites Ventilelement (10.2) betätigt,
wobei das erste Ventilelement (10.1) so gestaltet und positioniert ist, dass es bei Bewegung der Ventilspindel (10) zum Aufstoßen des Serviceventils (1) den Servoraum (20) fluidisch mit dem Anschluss (19) verbindet,
und das zweite Ventilelement (10.2) so gestaltet und positioniert ist, dass es erst öffnet und den Totraum (21) fluidisch mit dem Servoraum (20) verbindet, nachdem der Servokolben (8) eine den Entlüftungspfad schließende Position erreicht hat.

3. Anschlussadapter (0) zum An- und Abdocken einer Wartungsstation an ein Serviceventil (1) einer Fremdanlage, in der ein Arbeitsfluid in einem geschlossenen Kreislauf zirkuliert, nach Anspruch 1 oder 2, **dadurch gekennzeichnet, dass** der Servokolben (8) mindestens eine obere druckbeaufschlagte Stirnfläche (8.1) und mindestens eine untere druckbeaufschlagte Stirnfläche (8.2) aufweist, deren Verhältnis so gewählt ist, dass der Servokolben (8) immer dann, wenn im Servoraum (20) ein Druck, welcher größer ist als ein Grenzdruck, ansteht, gegen die Kraft einer Servokolbenfeder (14) dichtend gegen das zweite Ventilelement (10.2) gedrückt wird und/oder an den Anschlag einer Schiebehülse (4) und/oder wenn im Servoraum (20) ein Druck, welcher kleiner ist als ein Grenzdruck, ansteht, von der Kraft einer Servokolbenfeder (14) an den oberen Anschlag am Ventilgehäuse (18) gedrückt wird.

4. Anschlussadapter (0) zum An- und Abdocken einer Wartungsstation an ein Serviceventil (1) einer Fremdanlage, in der ein Arbeitsfluid in einem geschlossenen Kreislauf zirkuliert, nach einem der Ansprüche 1 bis 3, **dadurch gekennzeichnet, dass** die zur Ventilsteuerung der Ventile, die den Anschluss (19) mit dem Totraum (21) verbinden, eingesetzte Ventilspindel (10) ein erstes - bevorzugt als zylinderringförmiger Ventilteller ausgebildetes - Ventilelement (10.1) aufweist und ein zweites - bevorzugt als kegelabschnittförmiger Ventilteller ausgebildetes - Ventilelement (10.2) aufweist, das mit einem Ventilsitz am Servokolben (8) derart kooperiert, dass der Servokolben (8) von dem zweiten Ventilelement (10.2) beim Ankuppeln des Anschlussadapters (0) gegen einen Druck im Servoraum (20) in einer den Entlüftungspfad nicht verschließenden Position gehalten werden kann und beim Abkuppeln des Anschlussadapters (0) aus seiner den Entlüftungspfad verschließenden Position in eine den Entlüftungspfad nicht verschließende Position gezogen werden kann.

5. Anschlussadapter (0) zum An- und Abdocken einer Wartungsstation an ein Serviceventil (1) einer Fremdanlage, in der ein Arbeitsfluid in einem geschlossenen Kreislauf zirkuliert, insbesondere einer Klimaanlage, nach einem der Ansprüche 1 bis 4, **dadurch gekennzeichnet, dass** die Ventilspindel (10) an ihrem einen Ende den Niederhalter (10.5) zum Öffnen des einen Bestandteil des Serviceventils (1) bildenden Federventileinsatzes (29) ausbildet, der über einen Bund (31) zur Selbstausrichtung des Niederhalters (10.5) in den Rest der Ventilspindel (10) übergeht, wobei der Niederhalter (10.5) bevorzugt eine erste Radialbohrung (10.3.1) aufweist, die über eine mit ihr verschnittene Axialbohrung (10.4) in eine damit verschnittene zweite Radialbohrung (10.3.2) in der Ventilspindel (10) übergeht und so bei angekoppeltem Serviceventil (1) bevorzugt eine fluidische Verbindung zwischen dem Raum unterhalb eines Bundes (31) der Ventilspindel (10) und dem Raum innerhalb des Servokolbens (8) und innerhalb der Schiebehülse (4) schafft.

6. Anschlussadapter (0) zum An- und Abdocken einer Wartungsstation an ein Serviceventil (1) einer Fremdanlage nach einem der vorhergehenden Ansprüche, **dadurch gekennzeichnet, dass** das erste Ventilelement (10.1) so gestaltet und positioniert ist, dass es bei fehlendem Überdruck im Servoraum (20) den Servokolben (8) durch Formschluss in eine den Entlüftungspfad verschließende Position drücken kann.

7. Anschlussadapter (0) zum An- und Abdocken einer Wartungsstation an ein Serviceventil (1) einer Fremdanlage nach einem der vorhergehenden Ansprüche, **dadurch gekennzeichnet, dass** die Ventilspindel (10) in einem bevorzugt mehrteiligen Ventilgehäuse (18), das im Regelfall auch den Servoraum (20) und den Totraum (21) abgrenzt und im Idealfall auch den Anschluss (19) trägt, axialverschiebbar geführt ist, wobei das Ventilgehäuse (18) einen über ein Gewinde (17) mit ihm verbundenen Ventilbetätiger (16) trägt, mit dessen Hilfe die Ventilspindel (10) - die bevorzugt über Wälzlager (11) mit dem Ventilbetätiger (16) verbunden ist - in axialer Richtung relativ zum Ventilgehäuse (18) hin und her bewegt werden kann.

8. Anschlussadapter (0) zum An- und Abdocken einer Wartungsstation an ein Serviceventil (1) einer Fremdanlage, nach einem der vorhergehenden Ansprüche, **dadurch gekennzeichnet, dass** das Ventilgehäuse (18) eine ihm gegenüber axialverschiebliche Sperrhülse (2) trägt, die einerseits formschlüssig mit dem Ventilbetätiger (16) interagiert und andererseits formschlüssig mit Sperrkugeln (3) zum Arretieren eines Serviceventils (1) in seiner angeschlossenen Position interagiert, vorzugsweise derart, dass sich die Sperrhülse (2), solange kein Serviceventil (1) an den Anschlussadapter (0) angeschlossen ist, so gegen die Sperrkugeln (3) abstützt, dass sie nicht weiter über die Sperrkugeln (3) hinweg in axialer Richtung verschoben werden kann und dadurch einen Anschlag für den Ventilbetätiger (16) bildet, der dessen weitere Axialverschiebung in Richtung des Ventilgehäuses (18) unterbindet und/oder vorzugsweise derart, dass der Ventilbetätiger (16), solange ein Serviceventil (1) angeschlossen ist und das erste Ventilelement (10.1) noch nicht geschlossen ist, ein Verschieben der Sperrhülse (2) in ihre Entriegelungsposition, in der sie eine Verlagerung der Sperrkugeln (3) in radial auswärtiger Richtung erlaubt, verhindert.

9. Anschlussadapter (0) zum An- und Abdocken einer Wartungsstation an ein Serviceventil (1) einer Fremdanlage nach einem der vorhergehenden Ansprüche, **dadurch gekennzeichnet, dass** sich an dem Servokolben (8) über ein Federelement, bevorzugt in Form einer Servokolbenfeder (14), eine Schiebehülse (4) abstützt, die außenendseitig eine Schürze (22) aufweist, welche ein Kugelgegenlager bildet, das, solange kein Serviceventil (1) an den Anschlussadapter (0) angekuppelt ist, zwischen ihm und der Sperrhülse (2) die Sperrkugeln (3) derart blockiert, dass sie die Sperrhülse (2) zwischen sich und dem Ventilbetätiger (16) gefangen halten, und die durch das Einschieben des Serviceventils (1) so weit in Richtung des Servokolbens (8) verschoben wird, dass die Schürze (22) die Sperrkugeln (3) zum Einlegen in die korrespondierende Sperrnut (32) des Serviceventils (1) freigibt.

10. Anschlussadapter (0) zum An- und Abdocken einer Wartungsstation an ein Serviceventil (1) einer Fremdanlage nach einem der vorhergehenden Ansprüche, **dadurch gekennzeichnet, dass** die Sperrhülse (2) gegenüber dem Ventilgehäuse (18), bevorzugt gegenüber dem Ventilgehäuseunterteil (18.1), durch eine Feder (13) vorgespannt ist, wobei die Gestaltung eine solche ist, dass die Sperrhülse (2) mithilfe der besagten Feder (13) die Sperrkugeln (3) in radial einwärtiger Richtung in die Sperrnut (32) des Serviceventils (1) eindrückt und dort gefangen hält, sobald die Schiebehülse (4) so weit in Richtung des Servokolbens (8) verschoben worden ist, dass ihre Schürze (22) die Sperrkugeln (3) freigibt.

11. Anschlussadapter (0) zum An- und Abdocken einer Wartungsstation an ein Serviceventil (1) einer Fremdanlage nach einem der vorhergehenden Ansprüche, **dadurch gekennzeichnet, dass** die Schiebehülse (4) einen bevorzugt hohlzylindrischen Abschnitt (33) aufweist, in den der Servokolben (8) dichtend eintaucht, um den Entlüftungspfad zu verschließen.

12. Anschlussadapter (0) zum An- und Abdocken einer Wartungsstation an ein Serviceventil (1) einer Fremdanlage nach einem der vorhergehenden Ansprüche, **dadurch gekennzeichnet, dass** der Servokolben (8) und die Schiebehülse (4) über ein Wälzlager (34) aneinandergelagert sind.

13. Anschlussadapter (0) zum An- und Abdocken einer Wartungsstation an ein Serviceventil (1) einer Fremdanlage nach einem der vorhergehenden Ansprüche, **dadurch gekennzeichnet, dass** die Schiebehülse (4) einen Anschlag für den Servokolben (8) ausbildet, der dessen weitere axiale Verlagerung in Richtung des Serviceventils (1) verhindert.

14. Anschlussadapter (0) zum An- und Abdocken einer Wartungsstation an ein Serviceventil (1) einer Fremdanlage nach einem der vorhergehenden Ansprüche, **dadurch gekennzeichnet, dass** die Schiebehülse (4) die ihr vom Servokolben (8) mitgeteilte Druckkraft auf die Sperrkugeln (3) überträgt.

15. Anschlussadapter (0) zum An- und Abdocken einer Wartungsstation an ein Serviceventil (1) einer Fremdanlage nach einem der vorhergehenden Ansprüche, **dadurch gekennzeichnet, dass** die Ventilspindel (10) so gestaltet ist, dass sie einen Rastpunkt überfährt, der dem Benutzer bei der Betätigung des Ventilbetätigers (16) haptisch mitteilt, dass er von nun an den Federventileinsatz (29) aufstößt und/oder die Zwangsöffnung des Federventileinsatzes (29) beendet, wobei der Rastpunkt vorzugsweise durch einen Rastkugelstift (28) erzeugt wird, dessen Kugel sich vorübergehend in eine Ringnut (27) der Ventilspindel (10) einlegt.

16. Anschlussadapter (0) zum An- und Abdocken einer Wartungsstation an ein Serviceventil (1) einer Fremdanlage nach einem der vorhergehenden Ansprüche, **dadurch gekennzeichnet, dass** der Entlüftungspfad durch mindestens eine Querbohrung (4.1) der Schiebehülse (4), mindestens eine Querbohrung (18.2) im Ventilgehäuse (18) und idealerweise ein weiterer Teil des Entlüftungspfades durch mindestens eine Querbohrung (2.1) in der Sperrhülse (2) gebildet wird, wobei die Querbohrung (2.1) idealerweise derart gegenüber dem Rest des Entlüftungspfades versetzt ist, dass zwischen ihm und der Querbohrung (2.1) ein axialer Drosselspalt (2.2) gebildet wird.

## Claims

1. Connection adapter (0) for docking and undocking a maintenance station to a service valve (1) of a third-party system in which a working fluid circulates in a closed loop, in particular an air conditioning system with a connection (19) through which pressurized working fluid can be fed from the maintenance station into the connection adapter (0) for filling, or through which pressurized working fluid can be discharged, with a dead space (21) that is vented via a vent path even when the service valve (1) is coupled to the connection adapter (0) with a servo chamber (20) fluidibly connectable to the connection (19) in which servo chamber (20) a servo piston (8) for opening and closing the vent path is housed, wherein an overpressure present in the servo chamber (20) urges the servo piston (8) toward its position that closes the vent path, and with a valve spindle (10) that actuates a valve element (10.2), wherein the valve element (10.2) is designed and positioned such that it opens only and connects the dead space (21) fluidically to the servo chamber (20) after the servo piston (8) has reached a position that closes the vent path, and with a hold-down device (10.5) for opening a spring valve insert (29) that forms a component of the service valve (1), wherein the hold-down device (10.5) is designed and arranged such that it opens the spring valve insert (29) only after the servo piston (8) has reached a position that closes the vent path.

2. Connection adapter (0) for docking and undocking a maintenance station to a service valve (1) of a third-party system in which a working fluid circulates in a closed loop, according to claim 1, **characterized in that** the valve spindle (10) actuates a first valve element (10.1) and a second valve element (10.2), wherein the first valve element (10.1) is designed and positioned such that, when the valve spindle (10) moves to open the service valve (1), it fluidically connects the servo chamber (20) to the connection (19), and the second valve element (10.2) is designed and positioned such that it opens only after the servo piston (8) has reached a position that closes the vent path, thereby connecting the dead space (21) fluidically to the servo chamber (20).

3. Connection adapter (0) for docking and undocking a maintenance station to a service valve (1) of a third-party system in which a working fluid circulates in a closed loop, according to claim 1 or 2, **characterized in that** the servo piston (8) has at least one upper pressurized end face (8.1) and at least one lower pressurized end face (8.2), the ratio of which is selected such that whenever a pressure greater than a threshold pressure is present in the servo chamber (20), the servo piston (8) is pressed sealingly against the second valve element (10.2) and/or against the stop of a sliding sleeve (4), and/or, when a pressure in the servo chamber (20) is less than a threshold pressure, is pressed by the force of a servo piston spring (14) against the upper stop on the valve housing (18).

4. Connection adapter (0) for docking and undocking a maintenance station to a service valve (1) of a third-party system in which a working fluid circulates in a closed circuit, according to one of claims 1 through 3, **characterized in that** the valve spindle (10) used to control the valves connecting the port (19) to the dead space (21) comprises a first valve element (10.1)-preferably designed as a cylindrical annular valve disc - and a second valve element (10.2)-preferably designed as a conical-section valve disc-which cooperates with a valve seat on the servo piston (8) in such a way that the servo piston (8) can be held by the second valve element (10.2) can be held against the pressure in the servo chamber (20) in a position that does not close the vent path when the connection adapter (0) is coupled, and can be pulled from its position closing the vent path into a position that does not close the vent path when the connection adapter (0) is uncoupled.

5. Connection adapter (0) for connecting and disconnecting a maintenance station to a service valve (1) of a third-party system in which a working fluid circulates in a closed loop, in particular an air conditioning system, according to one of claims 1 through 4, **characterized in that** the valve spindle (10) forms, at one end, the hold-down device (10.5) foming the spring-loaded valve insert (29) for opening the one component of the service valve (1) and which, via a flange (31) for self-alignment of the hold-down device (10.5) transitions into the remainder of the valve spindle (10), wherein the retaining element (10.5) preferably comprises a first radial bore (10.3.1) that merges, via an axial bore (10.4) intersecting it, into a second radial bore (10.3.2) intersecting it in the valve spindle (10), thereby preferably creating, when the service valve (1) is coupled, a fluid connection between the space below a collar (31) of the valve spindle (10) and the space inside the servo piston (8) and inside the sliding sleeve (4).

6. Connection adapter (0) for docking and undocking a maintenance station to a service valve (1) of a third-party system according to one of the preceding claims, **characterized in that** the first valve element (10.1) is designed and positioned such that, in the absence of overpressure in the servo chamber (20), it can push the servo piston (8) into a position that closes the vent path by means of a form fit.

7. Connection adapter (0) for docking and undocking a maintenance station to and from a service valve (1) of a third-party system according to one of the preceding claims, **characterized in that** the valve spindle (10) is axially slidable within a preferably multi-part valve housing (18), which typically also delimits the servo chamber (20) and the dead space (21) and, ideally, also supports the connection (19), wherein the valve housing (18) supports a valve actuator (16) connected to it via a thread (17), by means of which the valve spindle (10)-which is preferably connected to the valve actuator (16) via rolling bearings (11)-can be moved back and forth in the axial direction relative to the valve housing (18).

8. Connection adapter (0) for docking and undocking a maintenance station to and from a service valve (1) of a third-party system, according to one of the preceding claims, **characterized in that** the valve housing (18) carries a locking sleeve that is axially displaceable relative to it (2) that, on the one hand, interacts in a form-fitting manner with the valve actuator (16) and, on the other hand, interacts in a form-fitting manner with locking balls (3) for locking a service valve (1) in its connected position, preferably such that the locking sleeve (2), as long as no service valve (1) is connected to the connection adapter (0), bears against the locking balls (3) in such a way that it cannot be displaced further axially past the locking balls (3) and thereby forms a stop for the valve actuator (16) that prevents its further axial displacement toward the valve housing (18) and/or, preferably, such that-as long as a service valve (1) is connected and the first valve element (10.1) is not yet closed-the valve actuator (16) prevents the locking sleeve (2) from moving into its unlocking position, in which it allows the locking balls (3) to shift in a radially outward direction.

9. Connection adapter (0) for docking and undocking a maintenance station to a service valve (1) of a third-party system according to one of the preceding claims, **characterized in that** the servo piston (8) supports, via a spring element-preferably in the form of a servo piston spring (14)- a sliding sleeve (4), which has a skirt (22) at its outer end that forms a ball counterbearing wherein this counterbearing, as long as no service valve (1) is coupled to the connection adapter (0), blocks the locking balls (3) between the adapter and the locking sleeve (2) in such a way that they remain trapped between the locking sleeve (2) between itself and the valve actuator (16), and which is displaced toward the servo piston (8) by the insertion of the service valve (1) to such an extent that the skirt (22) releases the locking balls (3) for insertion into the corresponding locking groove (32) of the service valve (1).

10. Connection adapter (0) for docking and undocking a maintenance station to a service valve (1) of a third-party system according to one of the preceding claims, **characterized in that** the locking sleeve (2) relative to the valve housing (18), preferably relative to the lower part of the valve housing (18.1), is preloaded by a spring (13), the design being such that the locking sleeve (2), with the aid of said spring (13), presses the locking balls (3) into the locking groove (32) of the service valve (1) in a radially inward direction and holds them captive there as soon as the sliding sleeve (4) has been displaced toward the servo piston (8) far enough that its skirt (22) releases the locking balls (3).

11. Connection adapter (0) for docking and undocking a maintenance station to a service valve (1) of a third-party system according to one of the preceding claims, **characterized in that** the sliding sleeve (4) has a preferably hollow cylindrical section (33) into which the servo piston (8) seals to close off the vent path.

12. Connection adapter (0) for docking and undocking a maintenance station to and from a service valve (1) of a third-party system according to one of the preceding claims, **characterized in that** the servo piston (8) and the sliding sleeve (4) are mounted to one another via a rolling bearing (34).

13. A connection adapter (0) for docking and undocking a maintenance station to and from a service valve (1) of a third-party system according to one of the preceding claims, **characterized in that** the sliding sleeve (4) forms a stop for the servo piston (8) that prevents its further axial displacement toward the service valve (1).

14. Connection adapter (0) for docking and undocking a maintenance station to and from a service valve (1) of a third-party system according to one of the preceding claims, **characterized in that** the sliding sleeve (4) transmits the compressive force imparted to it by the servo piston (8) to the locking balls (3).

15. Connection adapter (0) for docking and undocking a maintenance station to and from a service valve (1) of a third-party system according to one of the preceding claims, **characterized in that** the valve spindle (10) is designed such that it passes a detent point which provides haptic feedback to the user upon actuation of the valve actuator (16), indicating that it is now pushing against the spring-loaded valve insert (29. ) and/or terminating the forced opening of the spring-loaded valve insert (29. ), wherein the detent point is preferably produced by a detent ball pin (28), the ball of which temporarily engages in an annular groove (27) of the valve spindle (10).

16. Connection adapter (0) for docking and undocking a maintenance station to a service valve (1) of a third-party system according to one of the preceding claims, **characterized in that** the vent path is formed though at least one transverse bore (4.1) in the sliding sleeve (4), at least one transverse bore (18.2) in the valve housing (18), and ideally a further portion of the vent path is formed by at least one transverse bore (2.1) in the locking sleeve (2), wherein the transverse bore (2.1) is ideally offset relative to the rest of the vent path such that an axial throttling gap (2.2) is formed between it and the transverse bore (2.1).

## Revendications

1. Adaptateur de raccordement (0) destiné à raccorder et à déconnecter une station d'entretien à une vanne de service (1) d'une installation tierce, dans laquelle un fluide de travail circule dans un circuit fermé, en particulier d'un système de climatisation, comportant un raccord (19) par lequel, lors du remplissage, du fluide de travail sous pression provenant de la station d'entretien peut être introduit dans l'adaptateur de raccordement (0) ou par lequel le fluide de travail sous pression peut être évacué, comportant un espace mort (21) ventilé par un circuit de purge même lorsque la vanne de service (1) est accouplée à l'adaptateur de raccordement (0), comportant une chambre de servocommande (20) pouvant être reliée fluidiquement au raccord (19), dans laquelle est logé un piston de servocommande (8) destiné à ouvrir et fermer le circuit de purge, le piston de servocommande (8) étant poussé par une surpression régnant dans la chambre de servocommande (20) en direction de sa position de fermeture du circuit de purge, et comportant une tige de vanne (10) qui actionne un élément de vanne (10.2), l'élément de vanne (10.2) étant conçu et positionné de telle sorte qu'il s'ouvre et relie la chambre morte (21) à la chambre de servocommande (20) par un circuit fluidique seulement qu'après que le piston de servocommande (8) a atteint une position fermant le circuit de purge, et comportant un dispositif de maintien (10.5) destiné à ouvrir un insert de vanne à ressort (29) faisant partie intégrante de la vanne de service (1), le dispositif de maintien (10.5) étant conçu et agencé de manière à ouvrir l'insert de vanne à ressort (29) seulement qu'après que le piston de servocommande (8) a atteint une position fermant le circuit de purge.

2. Adaptateur de raccordement (0) destiné à raccorder et à déconnecter une station de maintenance à une vanne de service (1) d'une installation tierce, dans laquelle un fluide de travail circule dans un circuit fermé, selon la revendication 1, **caractérisé en ce que** la tige de vanne (10) actionne un premier élément de vanne (10.1) et un deuxième élément de vanne (10.2), le premier élément de vanne (10.1) étant conçu et positionné de telle sorte que, lors du déplacement de la tige de vanne (10) visant à ouvrir la vanne de service (1), il relie fluidiquement la chambre de servocommande (20) au raccord (19), et le deuxième élément de vanne (10.2) est conçu et positionné de telle sorte qu'il ne s'ouvre et ne relie l'espace mort (21) à la chambre de servocommande (20) par un circuit fluidique qu'après que le piston de servocommande (8) a atteint une position fermant le circuit de purge.

3. Adaptateur de raccordement (0) destiné à raccorder et à déconnecter une station de maintenance à une vanne de service (1) d'une installation tierce, dans laquelle un fluide de travail circule dans un circuit fermé, selon la revendication 1 ou 2, **caractérisé en ce que** le piston de servocommande (8) présente au moins une face frontale supérieure sous pression (8.1) et au moins une face frontale inférieure sous pression (8.2), dont le rapport est choisi de telle sorte que le piston de servocommande (8), dès lors qu'une pression supérieure à une pression limite règne dans la chambre de servocommande (20), soit pressé de manière étanche contre le deuxième élément de vanne (10.2) de manière étanche et/ou contre la butée d'un manchon coulissant (4) et/ou, lorsqu'une pression inférieure à une pression limite règne dans la chambre d'asservissement (20), soit poussé par la force d'un ressort de piston d'asservissement (14) contre la butée supérieure du corps de vanne (18).

4. Adaptateur de raccordement (0) destiné à raccorder et à désaccoupler une station de maintenance à une vanne de service (1) d'une installation tierce, dans laquelle un fluide de travail circule dans un circuit fermé, selon l'une des revendications 1 à 3, **caractérisé en ce que** la tige de vanne (10) utilisée pour la commande des vannes reliant le raccord (19) à la chambre morte (21) comporte un premier élément de vanne (10.1) - de préférence réalisé sous la forme d'un disque de vanne cylindro-annulaire - et un deuxième élément de vanne (10.2) - de préférence réalisé sous la forme d'un disque de vanne en forme de section de cône -, qui coopère avec un siège de vanne sur le piston d'asservissement (8) de telle sorte que le piston d'asservissement (8) puisse être maintenu par le deuxième élément de vanne (10.2), lors du raccordement de l'adaptateur de raccordement (0), contre une pression régnant dans la chambre de servocommande (20) dans une position n'obturant pas le circuit de purge, et puisse être tiré, lors du désaccouplement de l'adaptateur de raccordement (0), de sa position obturant le circuit de purge vers une position n'obturant pas le circuit de purge.

5. Adaptateur de raccordement (0) destiné à l'accostage et au désaccostage d'une station d'entretien à une vanne de service (1) d'une installation tierce, dans laquelle un fluide de travail circule dans un circuit fermé, en particulier d'un système de climatisation, selon l'une des revendications 1 à 4, **caractérisé en ce que** la tige de vanne (10) forme, à l'une de ses extrémités, le dispositif de maintien (10.5) destiné à ouvrir l'insert de vanne à ressort (29) constituant l'un des composants de la vanne de service (1), lequel se prolonge, par l'intermédiaire d'un collet (31) assurant l'auto-alignement du dispositif de maintien (10.5) dans le reste de la tige de vanne (10), le dispositif de maintien (10.5) comportant de préférence un premier alésage radial (10.3.1) qui, par l'intermédiaire d'un alésage axial (10.4) qui le croise, débouche dans un deuxième alésage radial (10.3.2) qui le croise dans la tige de vanne (10) et crée ainsi, lorsque la vanne de service (1) est accouplée, de préférence une communication fluidique entre l'espace situé sous un collet (31) de la tige de vanne (10) et l'espace à l'intérieur du piston de servocommande (8) et à l'intérieur du manchon coulissant (4).

6. Adaptateur de raccordement (0) destiné à l'accostage et au désaccostage d'une station de maintenance à une vanne de service (1) d'une installation tierce selon l'une des revendications précédentes, **caractérisé en ce que** le premier élément de vanne (10.1) est conçu et positionné de telle sorte qu'en l'absence de surpression dans la chambre d'asservissement (20), il puisse pousser le piston d'asservissement (8), par engagement positif, dans une position obturant le circuit de purge.

7. Adaptateur de raccordement (0) destiné à la mise en place et au retrait d'une station de maintenance sur une vanne de service (1) d'une installation tierce selon l'une des revendications précédentes, **caractérisé en ce que** la tige de vanne (10) est guidée de manière à pouvoir coulisser axialement dans un corps de vanne (18) de préférence en plusieurs parties, qui délimite généralement aussi la chambre d'asservissement (20) et la chambre morte (21) et qui, dans l'idéal, supporte également le raccord (19), le corps de vanne (18) supportant un actionneur de vanne (16) relié à celui-ci par un filetage (17), à l'aide duquel la tige de vanne (10) - qui est de préférence reliée à l'actionneur de vanne (16) par l'intermédiaire de roulements (11) - peut être déplacée dans un mouvement de va-et-vient dans le sens axial par rapport au corps de vanne (18).

8. Adaptateur de raccordement (0) destiné à raccorder et à déconnecter une station de maintenance à une vanne de service (1) d'une installation tierce, selon l'une des revendications précédentes, **caractérisé en ce que** le corps de vanne (18) porte une douille de blocage (2) pouvant coulisser axialement par rapport à lui (2) qui, d'une part, interagit par complémentarité de forme avec l'actionneur de vanne (16) et, d'autre part, interagit par complémentarité de forme avec des billes de blocage (3) pour bloquer une vanne de service (1) dans sa position raccordée, de préférence de telle sorte que la douille de blocage (2), tant qu'aucune vanne de service (1) n'est raccordée à l'adaptateur de raccordement (0), s'appuie contre les billes de blocage (3) de telle sorte qu'elle ne puisse plus être déplacée au-delà des billes de blocage (3) dans la direction axiale et forme ainsi une butée pour l'actionneur de vanne (16), qui empêche son déplacement axial supplémentaire en direction du corps de vanne (18) et/ou, de préférence, de telle sorte que l'actionneur de vanne (16), tant qu'une vanne de service (1) est raccordée et que le premier élément de vanne (10.1) n'est pas encore fermé, empêche le déplacement de la douille de verrouillage (2) vers sa position de déverrouillage, dans laquelle elle permet un déplacement des billes de blocage (3) dans une direction radiale vers l'extérieur.

9. Adaptateur de raccordement (0) destiné à la connexion et à la déconnexion d'une station de maintenance à une vanne de service (1) d'une installation tierce selon l'une des revendications précédentes, **caractérisé en ce que**, sur le piston d'asservissement (8), par l'intermédiaire d'un élément à ressort, de préférence sous la forme d'un ressort de piston d'asservissement (14), soutien un manchon coulissant (4) qui présente, à son extrémité extérieure, une jupe (22) formant un contre-appui pour les billes, ce contre-appui bloque les billes de blocage (3) entre l'adaptateur de raccordement (0) et le manchon de blocage (2) tant qu'aucune vanne de service (1) n'est accouplée à l'adaptateur de raccordement (0), de telle sorte qu'elles maintiennent le manchon de blocage (2) entre elles et l'actionneur de vanne (16), et qui, lors de l'insertion de la vanne de service (1), est déplacée vers le piston d'asservissement (8) jusqu'à ce que la jupe (22) libère les billes de blocage (3) pour qu'elles s'engagent dans la rainure de blocage correspondante (32) de la vanne de service (1).

10. Adaptateur de raccordement (0) destiné à la connexion et à la déconnexion d'une station de maintenance à une vanne de service (1) d'une installation tierce selon l'une des revendications précédentes, **caractérisé en ce que** la douille de blocage (2) est précontrainte par rapport au corps de vanne (18), de préférence par rapport à la partie inférieure du corps de vanne (18.1), est précontrainte par un ressort (13), la conception étant telle que la douille de verrouillage (2), à l'aide dudit ressort (13), enfonce les billes de verrouillage (3) dans une direction radiale vers l'intérieur dans la rainure de verrouillage (32) de la vanne de service (1) et les y maintient prisonnières dès que la douille coulissante (4) a été déplacée vers le piston d'asservissement (8) jusqu'à ce que sa jupe (22) libère les billes de blocage (3).

11. Adaptateur de raccordement (0) destiné à raccorder et à déconnecter une station de maintenance à une vanne de service (1) d'une installation tierce selon l'une des revendications précédentes, **caractérisé en ce que** le manchon coulissant (4) présente une section de préférence cylindrique creuse (33) dans laquelle le piston de servocommande (8) s'enfonce de manière étanche afin d'obturer le circuit de purge.

12. Adaptateur de raccordement (0) destiné à la connexion et à la déconnexion d'une station de maintenance à une vanne de service (1) d'une installation tierce selon l'une des revendications précédentes, **caractérisé en ce que** le piston de servocommande (8) et le manchon coulissant (4) sont montés l'un sur l'autre par l'intermédiaire d'un roulement (34).

13. Adaptateur de raccordement (0) destiné à la connexion et à la déconnexion d'une station de maintenance à une vanne de service (1) d'une installation tierce selon l'une des revendications précédentes, **caractérisé en ce que** le manchon coulissant (4) forme une butée pour le piston de servocommande (8), qui empêche son déplacement axial supplémentaire en direction de la vanne de service (1).

14. Adaptateur de raccordement (0) destiné à la connexion et à la déconnexion d'une station de maintenance à une vanne de service (1) d'une installation tierce selon l'une des revendications précédentes, **caractérisé en ce que** le manchon coulissant (4) transmet aux billes de blocage (3) la force de pression qui lui est communiquée par le piston de servocommande (8).

15. Adaptateur de raccordement (0) destiné à la connexion et à la déconnexion d'une station de maintenance à une vanne de service (1) d'une installation tierce selon l'une des revendications précédentes, **caractérisé en ce que** la tige de vanne (10) est conçue de telle sorte qu'elle franchit un point d'enclenchement qui signale de manière tactile à l'utilisateur, lors de l'actionnement de l'actionneur de vanne (16), qu'il pousse désormais l'insert de vanne à ressort (29) et/ou met fin à l'ouverture forcée de l'insert de vanne à ressort (29), le point d'enclenchement étant de préférence généré par une goupille à bille d'enclenchement (28) dont la bille s'engage temporairement dans une rainure annulaire (27) de la tige de vanne (10).

16. Adaptateur de raccordement (0) destiné à raccorder et à déconnecter une station de maintenance à une vanne de service (1) d'une installation tierce selon l'une des revendications précédentes, **caractérisé en ce que** le circuit de purge passe par au moins un alésage transversal (4.1) de la douille coulissante (4), au moins un alésage transversal (18.2) dans le corps de vanne (18) et, idéalement, une autre partie du circuit de purge est formée par au moins un alésage transversal (2.1) dans le manchon de blocage (2), le perçage transversal (2.1) étant idéalement décalé par rapport au reste du circuit de purge de telle sorte qu'un interstice d'étranglement axial (2.2) soit formé entre celui-ci et le perçage transversal (2.1).
